# EUROPEAN PATENT SPECIFICATION

(11) **EP 3 317 089 B1**
(45) Date of publication and mention of the grant of the patent: **30.12.2020**
(21) Application number: 16821737.0
(22) Date of filing: 30.06.2016
(51) Int. Cl.: B32B 3/04, B32B 3/10, B32B 7/12, E04C 2/16, B29C 53/36, E04C 2/32

(54) **A METHOD OF AND A DEVICE FOR PRODUCING A BUILDING ELEMENT**
VERFAHREN UND VORRICHTUNG ZUR HERSTELLUNG EINES BAUELEMENTS
PROCÉDÉ ET DISPOSITIF DE PRODUCTION D'UN ÉLÉMENT DE CONSTRUCTION

(30) Priority: 03.07.2015 SE 1550962
(43) Date of publication of application: 09.05.2018
(73) Proprietor: IKEA Supply AG, 4133 Pratteln (CH)
(72) Inventor: CARLANDER, Rolf, 423 63 Torslanda (SE); ANDREASSON, Bengt, 423 53 Torslanda (SE); ANDREASSON, Tomas, 423 53 Torslanda (SE)
(74) Representative: Ström & Gulliksson AB
(86) International application number: PCT/SE2016/050675
(87) International publication number: WO 2017/007406

(56) References cited:
- WO-A1-03/084740
- WO-A1-2010/049418
- WO-A1-2010/049418
- DE-A1- 3 821 611
- KR-A- 20090 033 995
- KR-B1- 101 126 262
- KR-B1- 101 126 262
- US-A- 3 654 053
- US-A1- 2006 272 275
- US-A1- 2014 291 262

## Description

### TECHNICAL FIELD

The present invention relates to a method of folding over and pressing a fibrous sheet to produce a panel-shaped building element having two large faces.

It also relates to a device for folding over and pressing a fibrous sheet to produce a panel-shaped building element having two large faces.

### BACKGROUND ART

In furniture manufacturing, for example, low weight elements are widely used. Such elements usually consist of a hollow body enclosing a lightweight filling material. The hollow body is covered by a thin film for increasing the aesthetic impression as well as for providing a protective coating for the element.

Such low weight elements can be used as building elements, door panels, and a large amount of furniture elements. Especially in case of home interior applications, heavy demands are made on the thin film. Any damage or degeneration will deteriorate the quality of the low weight element. Consequently, pluralities of manufacturing methods for such low weight elements have been presented.

WO 2010/049418 A1 discloses a laminated board, a furniture element including the laminated board, and a method of and a machine for manufacturing the laminated board. The laminated board comprises a board material having a foil laminated to one side and on the other side an elongate groove extending to the laminating foil. Upon folding the board material along the groove, a corner or an edge is formed. To ensure that the formed edge has an even surface, the groove is a groove with an x-shaped cross-section, whereby a normal corner/edge of 90 degrees is beveled to form two corners/edges of 135 degrees. If desired, it is also possible to give the innermost portion of the x-shaped cross-section such a shape that a single rounded corner is formed.

Furthermore, from KR-101126262 there is known a machine and a method for folding over and pressing a fibrous sheet to produce a panel-shaped building element having two large faces, namely a first half and a second half, wherein the first half carries spacing elements for providing a desired thickness of the building element, and the second half is divided into two parts to be folded on top of the first half from one side each by means of two reciprocating link arrangements each carrying a press roll to fold and attach the two parts by means of adhesive.

### SUMMARY OF THE INVENTION

The object of the present invention is to provide a method of and a device for folding over and pressing a fibrous sheet to produce a panel-shaped building element, where one and the same member is used to fold a second half of the fibrous sheet on top of a first half and thereafter also put pressure on top of the assembly formed to safely attach the halves to each other.

This object is achieved in that the method comprises the steps of:
- providing a fibrous sheet having a width, a length, and a thickness and including a first and a second half adapted to form at least a part of the faces, of the building element, the first half carrying spacing elements for providing a desired thickness of the building element,
- providing an adhesive for adhering the second half to the spacing elements;
- providing a rotary press roll, and moving the press roll in a loop of 360° in the same direction around the fibrous sheet to carry out the following steps:
- folding the fibrous sheet such that the second half of the fibrous sheet is placed on top of the first half; and
- pressing the second half of the fibrous sheet against the spacing elements on the first half of the fibrous sheet to become adhered thereto and to produce the building element having two main faces interconnected by the spacing elements and the adhesive.

The fibrous sheet preferably has on one side a foil cladding and on the on opposite side two lengthwise extending parallel grooves of perpendicularly at least partly V-shaped cross-section that are spaced apart from each other a distance equal to an intended thickness of the building element reduced by the double thickness of the cladding forming between them an intermediate first elongate portion to permit the fibrous sheet to be folded 90 degrees two times to position the second half on top of the first half. Further, preferably the first elongate portion after those two times of 90 degrees folding forms at least a major portion of a first narrow face of the building element.

In this context, the term "half' is adapted to mean a fibrous sheet portion that is adapted to form at least a major portion of one of the two large faces of the finished building element. Thus, as an illustrative example, the fibrous sheet may include the following portions separated from one another by the grooves and in the following order:
1. A minor portion of the second half of the fibrous sheet,
2. a portion for forming a first narrow face of the building element,
3. the first half of the fibrous sheet,
4. a portion for forming a second narrow face of the building element and,
5. a major portion of the second half of the fibrous sheet

By such a method, the fibrous sheet can be folded over swiftly and carefully in a very effective manner to produce the panel-shaped building element. The fact that the press roll is moved in a loop of 360° in the same direction around the fibrous sheet makes it possible to start making preparations for forming a subsequent building element already during the time the press roll is moved, in the loop, back to a starting position.

To speed up production, it is preferable to feed a sequence of fibrous sheets continuously through said loop, and at the same time move the press roll back and forth in the feed direction of the fibrous sheets so as to move together with each of the fibrous sheets while carrying out said folding and pressing, wherein said loop is in the form of a non-circular closed path movement, enabling the press roll to move along a desired path.

To accomplish this, it is suitable to provide a conveyor for feeding the fibrous sheets, a carriage for carrying the press roll, and at each end of the press roll a link system having two link arms for controlling the movement of the press roll in said loop.

The fibrous sheet to be folded over and pressed to form the, preferably low weight, panel-shaped building element may be of various types known to the skilled art worker. However, preferably, the folding includes folding the fibrous sheet in the groove closest to the first half of the fibrous sheet to form a first 90 degree fold, and then folding the fibrous sheet in a second groove to form a second 90 degree fold, whereby the second half of the fibrous sheet is placed on top of the first one.

In a first slightly modified embodiment, the fibrous sheet in addition to said first and second halves and an intermediate first elongate portion, which is adapted to form a first narrow face of the building element, includes a second elongate portion bounded from said first half by a third identical groove and adapted to form at least a major portion of a second narrow face of the building element. Then, the method further comprises folding the fibrous sheet in the third groove to form a third 90 degree fold. Thereby, a possible joint between neighboring edges of the fibrous sheet enclosing forming the exterior surface of the building element may be located on the second narrow face of the building element, if desired.

In a second slightly modified embodiment, the second elongate portion has a width adapted to cover the second narrow face of the building element, so as to place the joint in the corner between the second narrow face and the second large face of the building element.

In a third slightly modified embodiment, the fibrous sheet in addition includes a third elongate portion bounded from the second elongate portion by a fourth identical groove and adapted to form a minor portion of the second large face of the building element, and a width of said second half is reduced by at least a width of the third elongate portion to make the second half and the third elongate portion either meet or form a narrow gap (e.g. to enable support for a sheet formed rear side piece of a furniture) of at most a few millimeters width between them. Then, the method further comprises folding the fibrous sheet in the fourth groove to form a fourth 90 degree fold. Thereby the possible joint will be located on the second large face of the building element.

The grooves may or may not expose the cladding foil but are of form and/or a depth sufficient to permit the forming of the 90 degree folds. By saving a thin layer of fiber material at the bottom of the groove, the handling of the fibrous sheets may be facilitated, as the connection between the first and second halves is more stable than if the cladding foil provides the entire connection.

Another object of the invention is achieved in that a device for the folding and pressing comprises:
- a drive arrangement including at least a pair of annular members for actuating a looping movement of at least a pair of arm members pivotally and controllably connected thereto,
- a rotary press roll extending between said arm members,
- a table for receiving the fibrous sheet located between the arm members,
- a control arrangement arranged to move the press roll in a loop of 360° around the table from a position below the table to firstly fold over a second half of the sheet onto a first half of the sheet, secondly to press onto the second half in counter action with the table towards the first half and finally to return the press roll to a position below the table.

By such a device, the fibrous sheet can be folded over swiftly and carefully in a very effective manner to produce the panel-shaped building element.

According to further aspect of the device, it may be suitable that:
- each arm member comprise a link system having a first and a second link arm, the first link arm having a first end pivotally attached to one of the annular members and a second end rotary attached to the press roll, and the second link arm having a first end pivotally attached to the same annular member and a second end pivotally attached to a middle portion of the first link arm, providing a structure that in a flexible manner may fold and press along a variety of desired loops.
- the annular members comprise a first and a second ring pulley in a first pair of rotary ring pulleys, and a first and a second ring pulley in a second of rotary ring pulleys, said ring pulleys being coaxial, providing a structure that in an extra reliable and/or cost effective manner may fold and press along a variety of desired loops;
- peripherally arranged bearing assemblies are arranged to support the annular members radially and axially, providing a structure that in an extra reliable and/or cost efficient manner may fold and press along a variety of desired loops.
- the control arrangement (18, 19) comprises:
- a first drive for rotating the two first ring pulleys
- a second drive for rotating the two second ring pulleys,
- wherein one of the first and second drives is arranged to rotate the pulleys rotated thereby at a speed that varies relatively to the speed at which the other of the first and second drives rotates the pulleys rotated thereby during a completion of a full turn of the ring pulleys, providing a structure that in an extra reliable and/or cost efficient manner may fold and press along a variety of desired loops, wherein preferably the first drive includes two first drive pulleys, each first drive pulley driving an associated one of the two first ring pulleys over a first timing belt, and said two first drive pulleys being interconnected by a synchronizing roll shaft, and wherein more preferred also the second drive includes two second drive pulleys, each second drive pulley driving an associated one of the two second ring pulleys over a second timing belt, and said two second drive pulley being interconnected by a synchronizing roll shaft.
- the second drive is arranged to provide a first speed, preferably constant, and the first drive includes a gear train operatively connected to the second drive and arranged to provide a second speed which varies in relation to the first speed, providing a control arrangement that in an extra reliable and/or cost efficient manner may fold and press along a variety of desired loops, wherein preferably the varying speed is arranged to cause a distance between the pivotal end of the first link arm and the first pivotal end of the second link arm to vary during a turn so as to move the press roll in the loop around the table, and more wherein during the full turn the pivotal end of the first link arm lies ahead of the first pivotal end of the second link arm and an angle between these two pivotal ends varies within an interval of 20° to 120°.
- a carriage for carrying said annular members press roll, arm members, table and control arrangement, said carriage being adapted to be supported by an elongate support structure and be movable back and forth thereon, the carriage being arranged to move together with each of the fibrous sheets while carrying out said folding and pressing, providing a structure that in an extra reliable and/or cost efficient manner may achieve an automated line for producing building elements by folding and pressing.
- a belt conveyor having a pervious belt is provided for continuously feeding a sequence of fibrous sheets through the device, providing a structure that in an extra reliable and/or cost efficient manner may achieve an automated line for producing building elements by folding and pressing, wherein preferably the device including a suction member arranged to fix a portion of each fibrous sheet to the table.
- said table has an inner end parallel to and adjacent the axis of the annular members, said device further comprising a first pushing apparatus acting at said end and arranged to fold an intermediate first elongate portion of the fibrous sheet, providing a structure that in an extra reliable and/or cost efficient manner may achieve an automated line for producing building elements by folding and pressing.

According to one embodiment the device may comprise;
- a first and a second ring pulley in a first pair of rotary ring pulleys, and a first and a second ring pulley in a second pair of rotary ring pulleys, said ring pulleys being coaxial and said pairs being spaced from each other;
- bearing assemblies for supporting the ring pulleys radially and axially;
- a rotary press roll extending from the first pair of ring pulleys to the second pair;
- at each pair of ring pulleys a link system having a first and a second link arm, the first link arm having one end pivotally attached to one of the ring pulleys and the other end rotary attached to the press roll, and the second link arm having a first end pivotally attached to the second ring pulley and a second end pivotally attached to a middle portion of the first link arm;
- a table for receiving the fibrous sheet located between the two link systems;
- a first drive for rotating the two first ring pulleys;
- a second drive for rotating the two second ring pulleys;
- wherein one of the drives is arranged to rotate either the first ring pulleys or the second ring pulleys at a varying speed during a completion of a full turn of the ring pulleys so as to move the press roll in a closed loop around the table for folding over and pressing the fibrous sheet to produce the panel-shaped building element having two large faces.

The drive providing variable speed may be of various types known to the skilled art worker, *e.g.* a driving motor may be controlled electronically by a CPU. However, preferably, one of the drives is arranged to provide a constant speed, and the other drive that is arranged to provide varying speed comprises a gear train incorporated in the first drive, said gear train also being operatively connected to the second drive, the gear train preferably being such that the varying speed causes a distance between the pivotal end of the first link arm and the first pivotal end of the second link arm to vary during a turn of 360° so as to move the press roll in a closed loop around the table to first fold over the fibrous sheet, then roll the press roll over the folded fibrous sheet to produce the building element, and finally return the press roll under the table to a start position to close the loop, i.e. by moving the press roll in one and the same direction in a 360° loop around the table. A mechanical drive generally is more reliable than an electronic one.

To provide the desired loop movement of the press roll, it is suitable that during the full turn of the ring pulleys the pivotal end of the first link arm lies ahead of the first pivotal end of the second link arm and an angle between these two pivotal ends may vary within an interval of 30° to 90°.

It is preferred that the first drive includes two first drive pulleys, each first drive pulley driving an associated one of the two first ring pulleys over a first timing belt, and said two first drive pulleys being interconnected by a synchronizing roll shaft. Thereby, the two first drive pulleys are synchronized to each other.

Likewise it is preferred that the second drive includes two second drive pulleys, each second drive pulley driving an associated one of the two second ring pulleys over a second timing belt, and said two second drive pulleys being interconnected by a synchronizing roll shaft. Thereby, the two second drive pulleys are synchronized to each other.

To improve the ability to include the device in a production line, the device suitably comprises a carriage for carrying said ring pulleys, press roll, link systems, table and drives, said carriage being adapted to be supported by an elongate support structure and movable back and forth thereon.

Further the device suitably comprises a belt conveyor having a pervious belt for continuously feeding a sequence of fibrous sheets through the device, a suction member for fixing a portion of each fibrous sheet to the table, and the device is continuously reciprocating along the support structure to move together with each of the fibrous sheets while carrying out said folding and pressing. Hereby the rate of production can be increased.

It is suitable that the table has a longitudinal slot parallel to the axis of the ring pulleys, and that the device further comprises a first pushing apparatus acting through said slot for assisting in an initial portion of the folding of the fibrous sheet and contributing to the high production rate.

The fibrous sheet to be folded over and pressed to form the, preferably low weight, panel-shaped building element may be of various types known to the skilled art worker. However, preferably, the fibrous sheet has a width, a length, and a thickness and on one side a foil cladding and on the on opposite side two lengthwise extending parallel grooves of perpendicularly V-shaped cross-section that are spaced apart from each other a distance equal to an intended thickness of the building element reduced by the double thickness of the fibrous sheet to form a first and a second half adapted to form the two large faces of the building element and permit the fibrous sheet to be bent 90 degrees two times to position the second half on top of the first one. The first one of the halves carries spacing elements for providing a desired thickness of the building element, and the spacing elements and/or the second half carry an adhesive for fixing the second half to the spacing elements in a finished building element. The adhesive may be applied at any time before the folding over of the second half, outside or inside of the device. Further, the pairs of ring pulleys are spaced from each other a longer distance than the length of the fibrous sheet, and the ring pulleys are of a single size and have a diameter that is larger than the width of the fibrous sheet.

The spacing elements preferably include solid pad members of sufficient size to permit attachment screws to penetrate and be firmly anchored therein. Thereby the strength and stability of the produced building elements can be increased and the mounting of them in installations by means of screws be more secure.

Further, the spacing elements preferably include board strips standing on their edge and extending parallel to the grooves. Thereby the pad members can be placed in a space between two parallel neighboring board strips.

In a first slightly modified embodiment, the fibrous sheet in addition to said first and second halves and an intermediate first elongate portion, which is adapted to form a first narrow face of the building element, includes a second elongate portion bounded from said first half by a third identical groove and adapted to form at least a major portion of a second narrow face of the building element. Then, the device further comprises a second pushing apparatus for folding the fibrous sheet in the third groove to form a third 90 degree fold. Thereby, a possible joint between neighboring edges of the fibrous sheet enclosing forming the exterior surface of the building element may be located on the second narrow face of the building element, if desired. If desired, the second elongate portion has a width adapted to cover the second narrow face of the building element, so as to place the joint in the corner between the second narrow face and the second large face of the building element.

In a second slightly modified embodiment, the fibrous sheet in addition includes a third elongate portion bounded from the second elongate portion by a fourth identical groove and adapted to form a minor portion of the second large face of the building element, and a width of said second half is reduced by at least a width of the third elongate portion to make the second half and the third elongate portion either meet or form a narrow gap of at most a few millimeters width between them. Then, said second pushing apparatus also folds the fibrous sheet in the fourth groove to form a fourth 90 degree fold. Thereby the possible joint will be located on the second large face of the building element.

### BRIEF DESCRIPTION OF THE DRAWINGS

In the following, the invention will be described in more detail with reference to preferred embodiments and the appended drawings.
- Fig. 1: is a perspective view of part of a machine for producing panel-shaped building elements from fibrous sheets and including a folding over and pressing device of the invention with one finished building element leaving the machine.
- Fig. 2: is a perspective view of the machine of Fig. 1 viewed from the side.
- Fig. 3: is a perspective view of the machine of Figs. 1 and 2 viewed from an opposite direction at an intake end of the machine and showing one stage in the folding of the fibrous sheet.
- Fig. 4: is a perspective view of the machine of Fig. 3 viewed from an intake end of the machine and showing the same stage in the folding as Fig. 3.
- Fig. 5: is a perspective view of an interior end of the folding over and pressing device in the machine of Figs. 1-4 and showing the folding and pressing mechanism of the device.
- Fig. 6: is a perspective view of part of two ring pulleys included in the folding and pressing mechanism, and a bearing assembly for supporting the ring pulleys radially and axially.
- Fig. 7: is a perspective view similar to Fig. 6 but from another direction.
- Fig. 8: is a perspective view of a drive assembly for driving the ring pulleys.
- Figs. 9a-9f: are cross-sectional views of the machine and show different stages in the folding and pressing of the fibrous sheet to form the building element.
- Fig. 10: is an enlargement of part of Fig. 4 and showing in detail the fibrous sheet with spacing elements and pads and one half of the sheet being bent by a press roll assisted by a pusher.
- Fig. 11a: is a perspective view of one end of one embodiment of a produced building element.
- Figs. 11b and 11c: are end views of part of a fibrous sheet with grooves, which part can be folded and pressed to form the right hand side of the building element of Fig. 11a.
- Fig. 12a and 12b: are end views of part of a fibrous sheet with grooves, which part can be folded and pressed to form the left hand side of the building element of Fig. 11a.
- Fig. 13: is a plan view of one end of another embodiment of a produced building element with the top side made invisible for better clarity.
- Fig. 14: is an end view of the building element of Fig. 13.

### DETAILED DESCRIPTION OF PREFERRED EMBODIMENTS

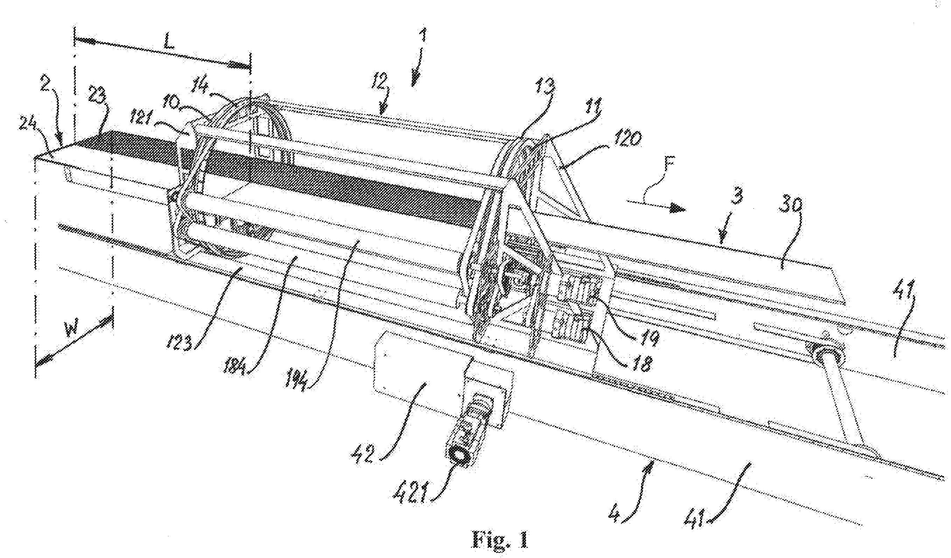

The machine shown in the drawings includes a folding and pressing device 1 for folding over and pressing a fibrous sheet 2 to form a low weight panel-shaped building element 3 having two large faces 30, one of which is shown facing upwards in Fig. 1. The pressing device 1 has an inlet end 10 and an outlet end 11, and a conveyor assembly, not shown in the drawings, transports the fibrous sheet 2 in a feeding direction F through the inlet end 10 into the pressing device 1, where the fibrous sheet 2 is being folded over and pressed, and discharges the produced building element 3 through the outlet end 11.

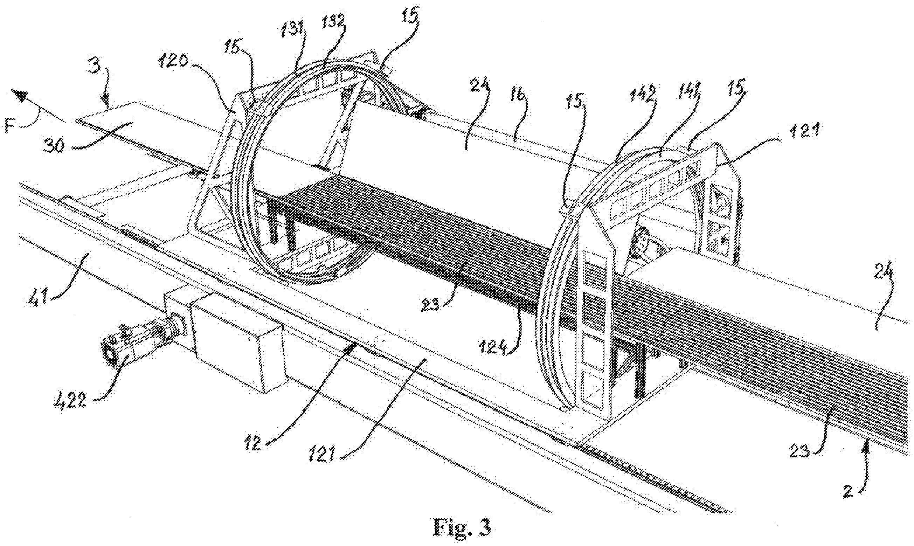

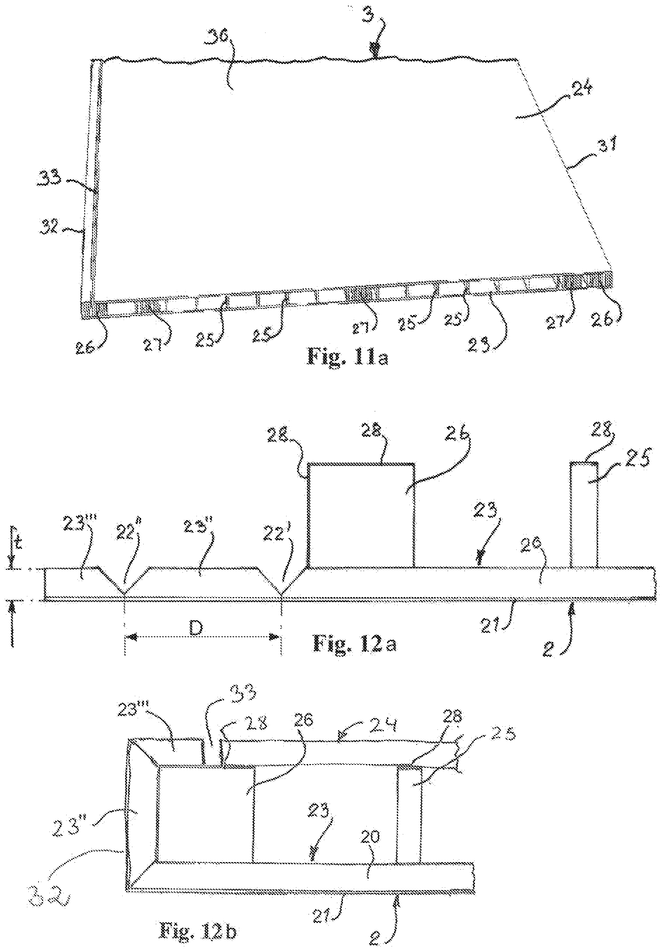

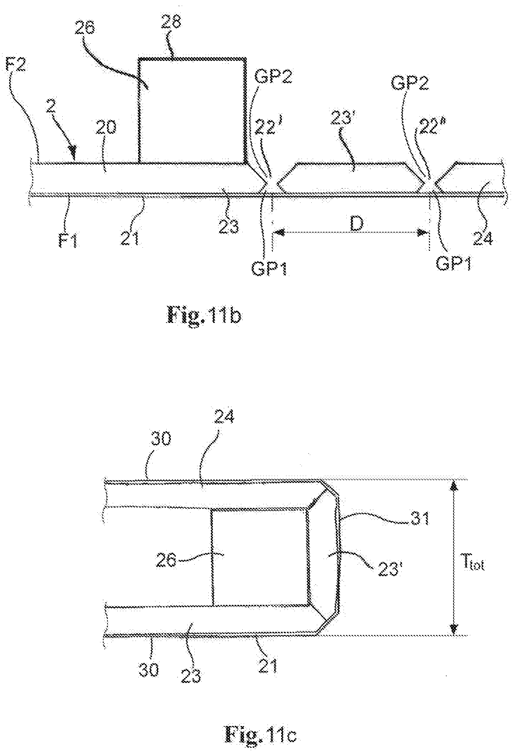

The fibrous sheet 2 to be folded over and pressed to form the low weight panel-shaped building element 3 may be of various types known to the skilled art worker. However, preferably, the fibrous sheet 2 preferably has a width W, a length L (best shown in Fig. 1), and as shown in Figs. 11b and 12a, a thickness t. The sheet 2 may preferably originate from a rolled up store of sheet material, e.g. made of board, having the desired width W, wherein the length L preferably is cut prior to the pressing device, or alternately merely one half 24 of the board 2 is cut prior to the pressing device, as illustrated in Fig. 3.

The fibrous sheet 2 suitably comprises, as best shown in figs 11b and 12a, a board sheet 20 having on one side a foil cladding 21 and on the on opposite side two lengthwise extending parallel grooves 22', 22" of perpendicularly V-shaped cross-section that are spaced apart from each other a distance D equal to an intended thickness Tₜₒₜ (Fig. 11c) of the building element reduced by the double thickness of the cladding 21 to form a first 23 and a second 24 half adapted to form the two large faces of the building element 3. The grooves 22', 22" (Fig. 11b) permit the fibrous sheet 2 to be bent 90 degrees two times to position the second half 24 on top of the first half 23. Thus, in addition to said first and second halves 23 and 24, the fibrous sheet 2 has an intermediate first elongate portion 23' (Figs. 11b, 11c) and a second elongate portion 23" (Figs. 12a, b), which are bounded by grooves 22', 22" and adapted to form a first narrow face 31 (Figs. 11a, 11c) and a second narrow face 32 (Figs. 11a, 12b) of the building element 3. Further, the first one 23 of the halves carries spacing elements 25, 26, 27 (Figs. 11a,b,c, 12a,b) for providing a desired thickness of the building element 3, and said spacing elements 25, 26, 27 carry an adhesive 28 for fixing the second half 24 to the spacing elements 25, 26, 27 in a finished building element 3. As alternative to, or in combination with being applied on the spacing elements 25, 26, 27, adhesive may also be applied on the second half 24. Hence, adhesive 28 may be applied to the spacing elements 25, 26, 27 and/or on the second half 24. The adhesive 28 may be applied at any time before the folding over of the second half 24, outside or inside of the folding and pressing device 1 and at any or both of the parts 24, 25, 26, 27 that are to be joined by adhesive.

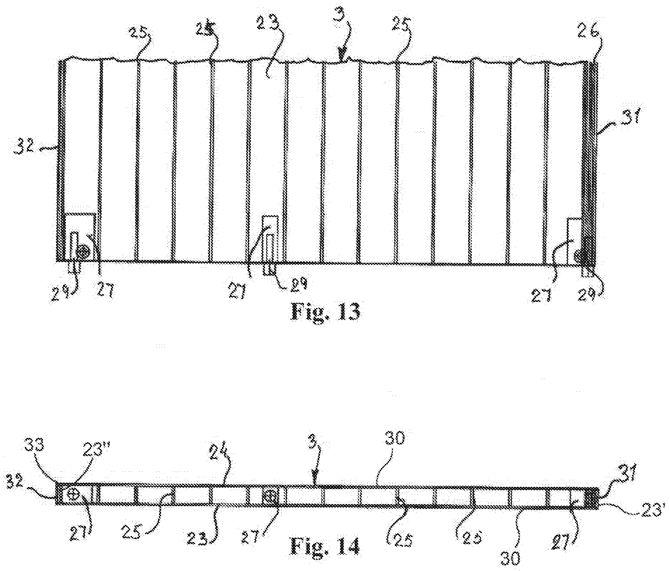

In a preferred embodiment, the board sheet 20 has a thickness of about 1-3 mm, the spacing elements are board strips 25 of the same thickness and a height of about 10 to about 30 mm standing on their longitudinal edges parallel to the grooves 22, laths 26 forming the longitudinal side edges of the building element 3, and in spaces between the other spacing elements, solid pad or block members 27 of sufficient size are arranged to permit attachment members, e.g. screws 29 (Fig. 13) to penetrate and be firmly anchored therein. Thereby the strength and stability of the produced building elements 3 can be increased and the mounting of them in installations by means of screws be more secure. If desired, it is of course possible to provide more laths 26 and/or pads/blocks 27 and place them at other locations than shown in the drawings.

In the shown preferred embodiment, the spacing board strips 25 are straight, but as is evident for the skilled person they may be of varying shape/form to fulfill its purpose, e.g. alternatively have a zigzag or wave shape or an interconnected structure, e.g. honey comb structure. The described preferred fibrous sheet may contribute to a high production rate.

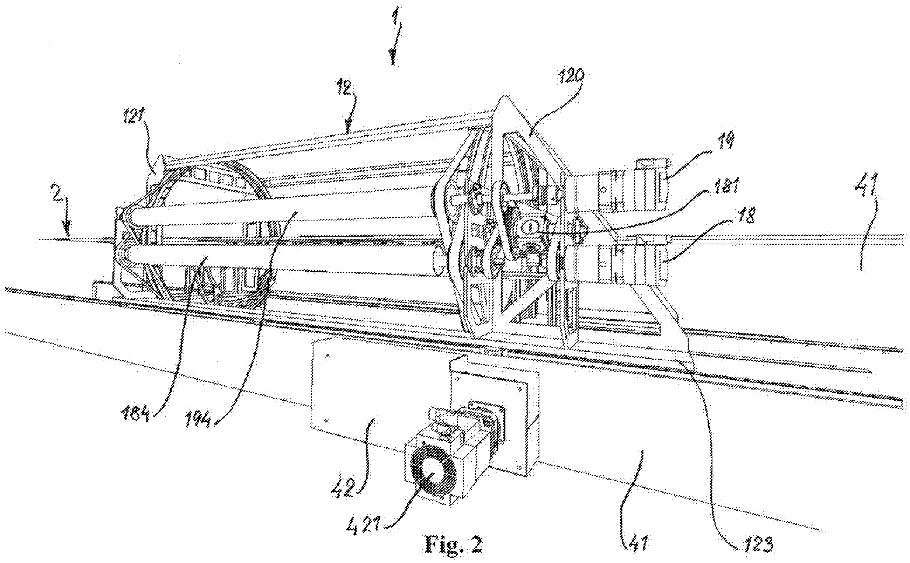

The grooves 22', 22" may, for example, be formed in accordance with principles previously known and described in WO 2010/049418, see for example Figs. 2a-2b of that document. Hence, for example, as illustrated in Fig. 11b of the current application first groove portions GP1 are first formed in a first face F1 of the fibrous sheet 2. Then the foil cladding 21 is applied to the first face F1. Then second groove portions GP2 are formed in a second face F2, being opposite to the first face F1, of the fibrous board 2. By the forming of the second groove portions GP2 the final appearance of the grooves 22', 22" is obtained, as illustrated in Fig. 11b, and the halves 23, 24 and the intermediate first elongate portion 23' become separated from each other, but are still held together by the foil cladding 21.When performing the folding the edge will obtain the appearance of Fig. 11c. It will be appreciated that the opposite edge, illustrated in Fig. 12b, may also be designed according to the general principles described in Figs 11b-c.

Returning to Fig. 1 the folding and pressing device 1 comprises a cage-like frame 12 having a first open bracket member 121 at the inlet end 10 of the press device 1 and a second open bracket member 120 at the outlet end 11 to permit the fibrous sheet 2 to enter through the opening in the first bracket member 121 and after folding and pressing be discharged as a finished building element 3 through the opening in the second bracket 120. These two bracket members 120 and 121 are fixed to a base member 123.

Further, the folding and pressing device 1 comprises a first 131 and a second 132 ring pulley (Fig. 3) in a first pair 13 (Fig. 1) of rotary ring pulleys, and a first 141 and a second 142 ring pulley (Fig. 3) in a second pair 14 (Fig.1) of rotary ring pulleys. The four ring pulleys are coaxial and the pairs 13 and 14 are spaced from each other a distance that is larger than the length L of the fibrous sheet 2. The inner diameter of the four ring pulleys 131, 132, 141, 142 is larger than the width W of the fibrous sheet 2 to permit its passage through the ring pulleys.

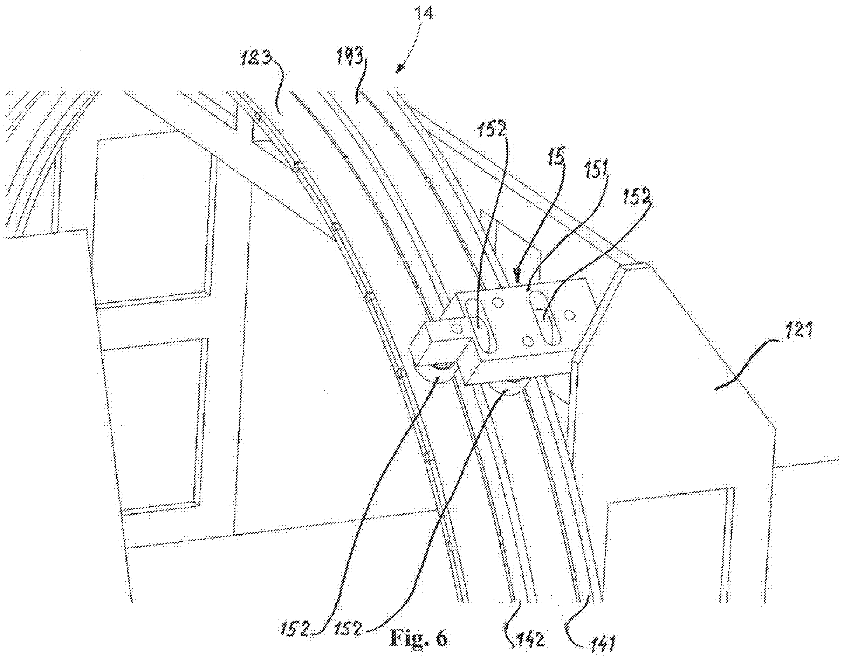

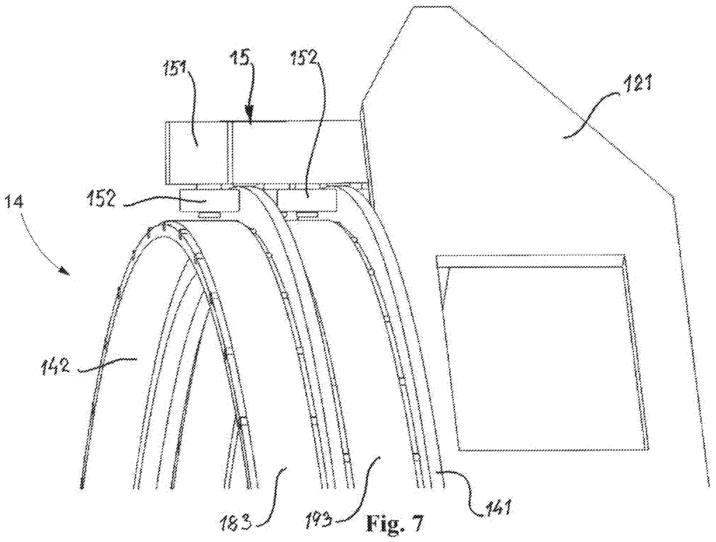

As is best shown in Figs. 6, 7, and 9a-9f, bearing assemblies 15 are arranged for supporting the ring pulleys 131, 132, 141, 142 radially and axially. In the shown preferred embodiment each ring pulley is supported by four bearing assemblies 15 spaced around, preferably equidistantly, the periphery of each ring pulley. Each bearing assembly 15 is attached to the frame 12 and includes a housing 151 with a plurality of wheels 152, e.g. three wheels for each ring pulley, in the shown preferred embodiment a single housing 151 with six wheels 152, three for each ring pulley in the pair. One of the wheels 152 gives radial support to a ring pulley and the two other wheels 152 support the ring pulley axially in opposed directions.

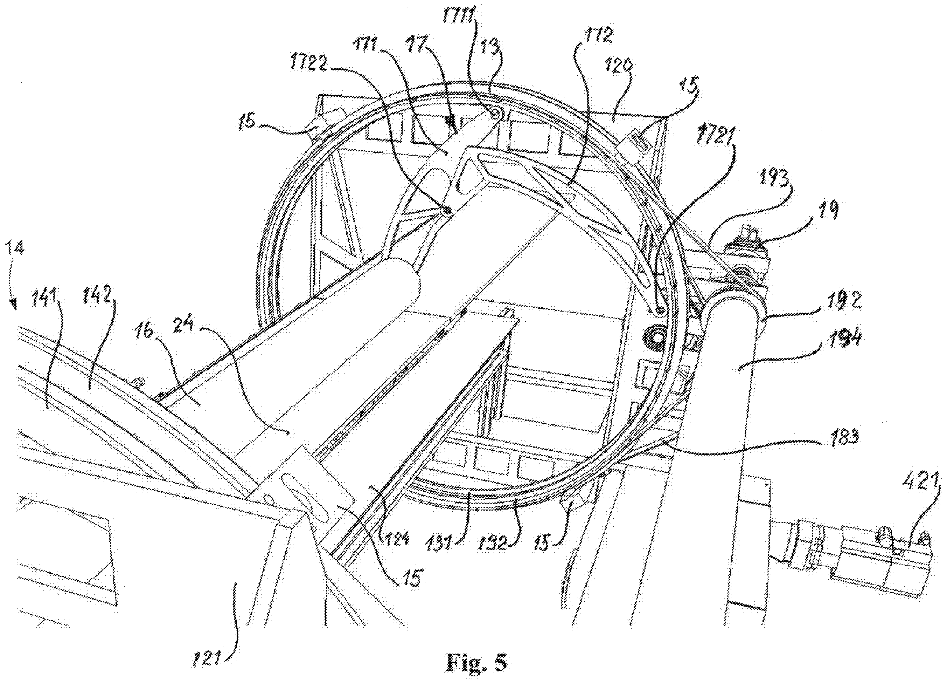

Further, the folding and pressing device 1 comprises a rotary press roll 16 (Fig. 5) extending from the first pair 13 of ring pulleys to the second pair 14. The press roll 16 has a length that is larger than the length L of the fibrous sheet 2.

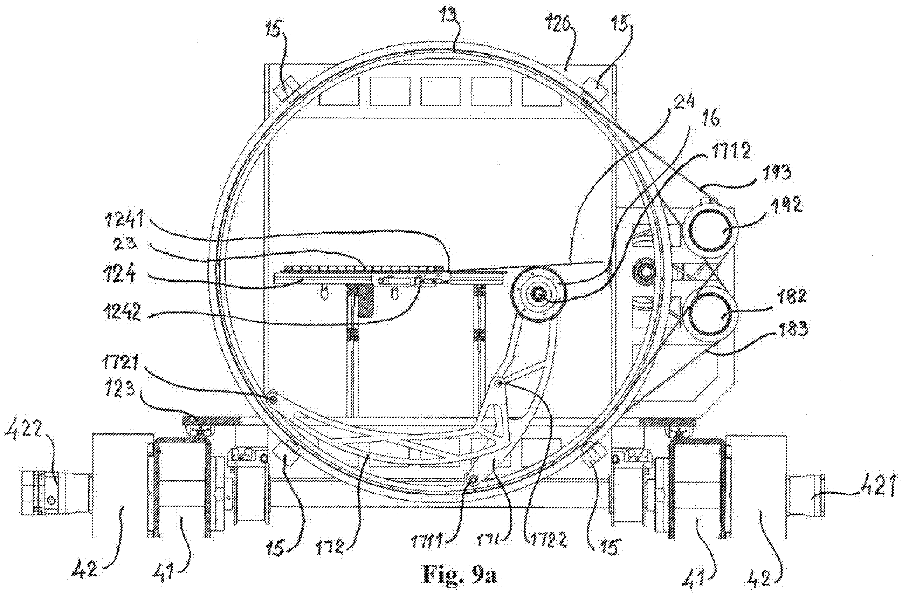

Still further, as is best shown in Figs. 5 and 9a-9f, the folding and pressing device 1 comprises at each pair 13 and 14 of ring pulleys a set of arm members in the form of a link system 17 having a first 171 and a second 172 link arm. As the two link systems are identical but mirror symmetrical, only the link system at pair 13 is described. The first link arm 171 has one pivotal end 1711 pivotally attached to one 131 of the ring pulleys and the other end 1712 (Figs. 9a-9f) rotary attached to the press roll 16, and the second link arm 172 has a first end 1721 pivotally attached to the other ring pulley 132 in the pair and a second end 1722 pivotally attached to a middle portion of the first link arm 171. A table 124 for receiving and supporting the fibrous sheet 2 is located between the two link systems 17 and the table 124 is at its ends carried by the two brackets 120 and 121.

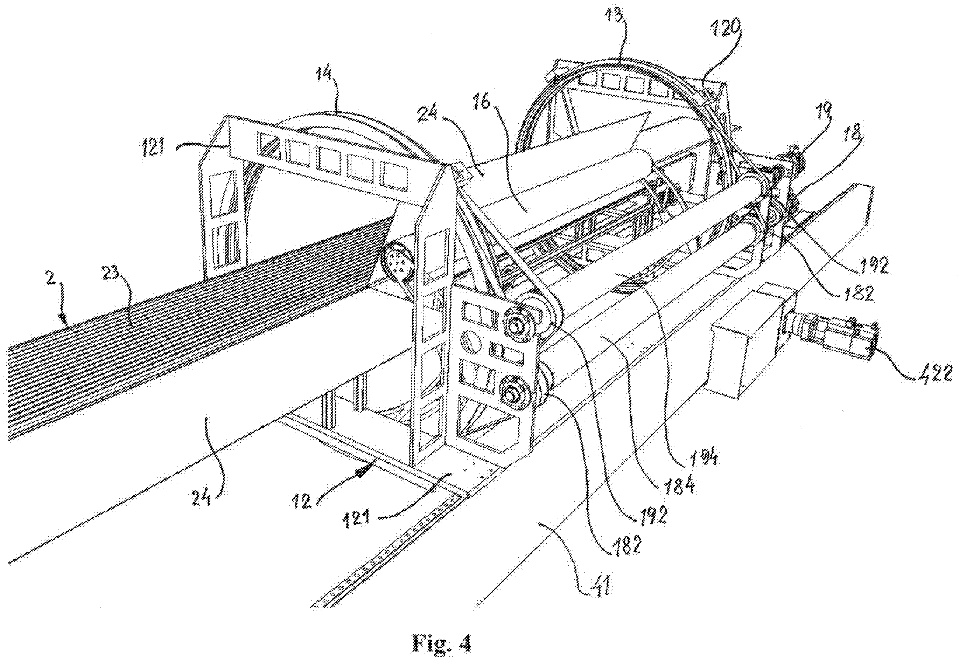

As shown in Fig. 4, the folding and pressing device 1 further comprises a first drive 18 for rotating the two first ring pulleys 131, 141 and a second drive 19 for rotating the two second ring pulleys 132, 142. One of the drives 18 and 19 is arranged to rotate either the first ring pulleys 131, 141 or the second ring pulleys 132, 142 at a varying speed, compared to the other drive 19, 18, during a completion of a full turn of the ring pulleys. Thereby, the first and second link arms 171, 172 will move in relation to each other and will move the press roll 16 in a closed loop, i.e. rotating the ring pulleys 131, 132, 141, 142 360° in one and the same direction makes the press roll 16 follow a closed loop of 360°, following one and the same direction, around the table 124 for folding over and pressing the fibrous sheet 2 to produce the low weight panel-shaped building element 3 having two large faces, as will be described in more detail hereinafter.

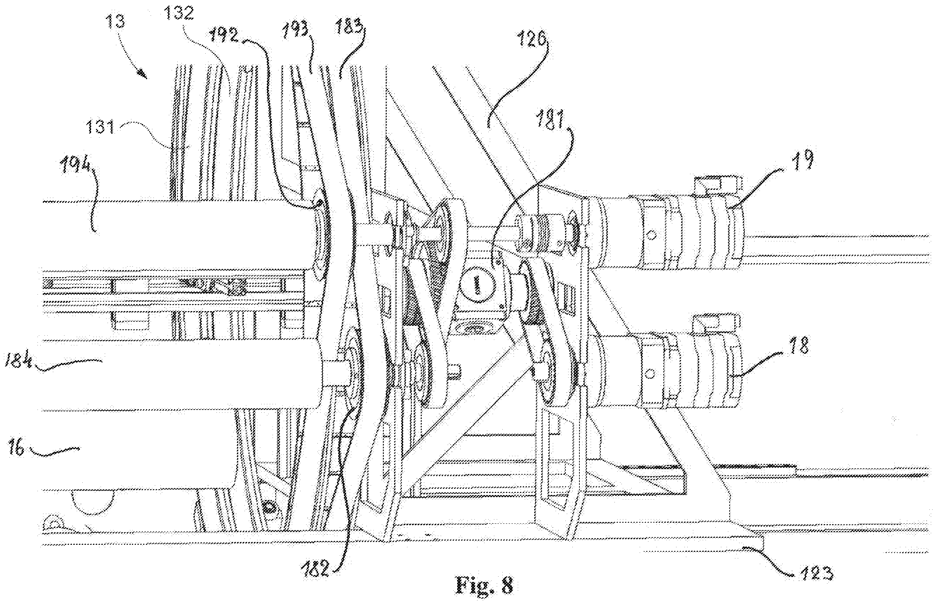

The drive providing variable speed may be of various types known to the skilled art worker, *e.g.* a driving motor may be controlled electronically by a CPU. However, in the preferred embodiment shown in Fig. 8, the second drive 19 is arranged to provide a constant speed, and the first drive 18 includes a gear train 181 arranged to provide varying speed. The gear train 181 is also operatively connected to the second drive 19, as explained in more detail below. The second drive 19 includes a shaft having an intermediate and an outer 192 drive pulley, here called the second drive pulley. The first drive 18 has an inner drive pulley that drives a first gear drive belt, which in turn drives a first gear train pulley of the gear train 181 on its input side. On the output side of the gear train 181 there is second and third gear train pulley. The second gear train pulley is via a second gear drive belt connected to the intermediate drive pulley on the shaft of the second drive 19. The third gear train pulley is via a third gear drive belt connected to an input pulley for a shaft driving a first drive pulley 182. The gear train 181 comprises a planetary gear (not shown) providing a desired gear ratio between input and output shafts, preferably in the interval of 1:1,5 to 1:5. By means of this arrangement the driving of the first and second drive pulleys 182, 192 is interconnected such that their speed may be controlled by varying the speed of the first drive 18 in relation to the speed of the second drive 19, e.g. by keeping a constant speed of the first drive 19 and periodically increase and decrease the speed of the first drive 18, respectively. Accordingly, the gear train 181 is such that the varying speed causes a distance between the pivotal end 1711 of the first link arm 171 and the first pivotal end 1721 of the second link arm 172 to vary during a turn so as to move the press roll 16 in a closed loop around the table 124.

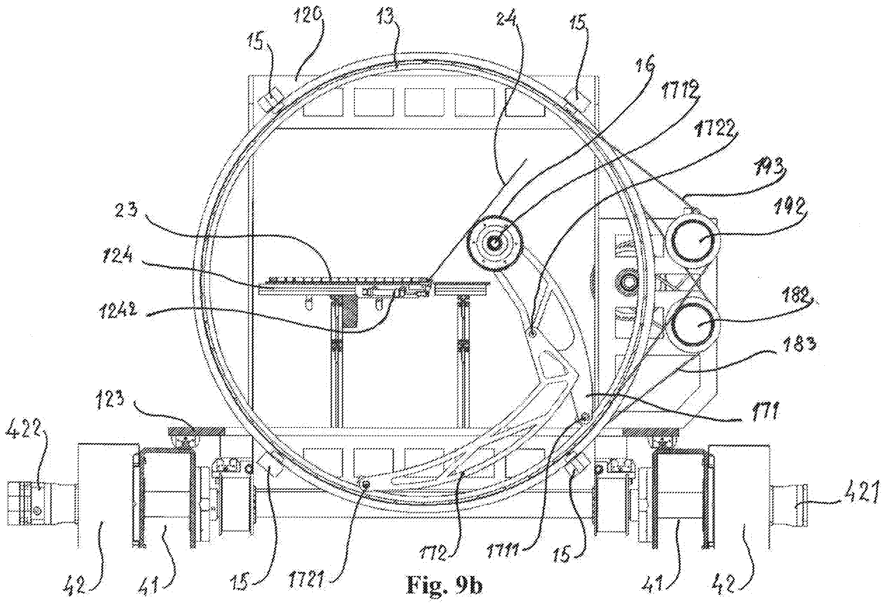

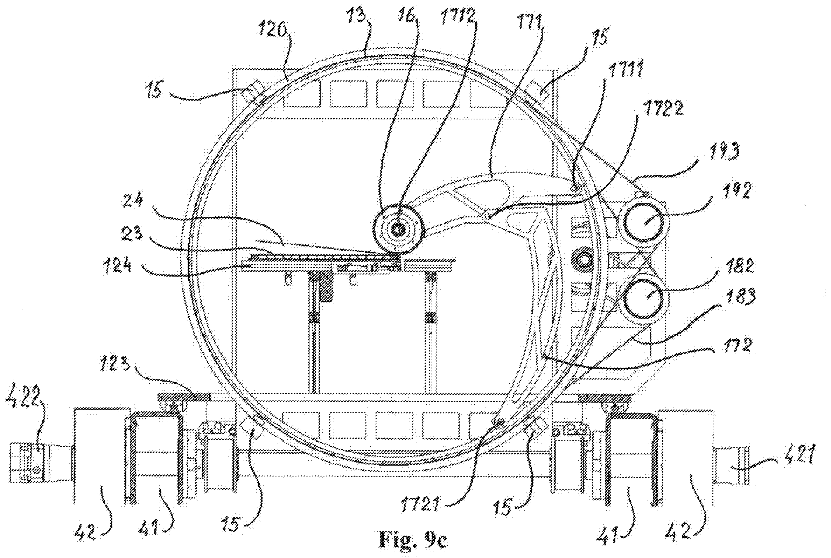

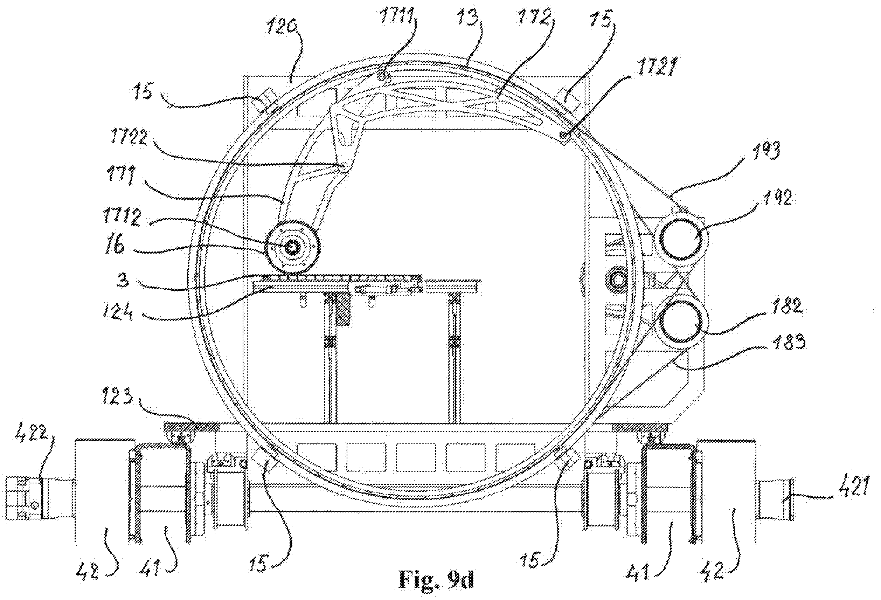

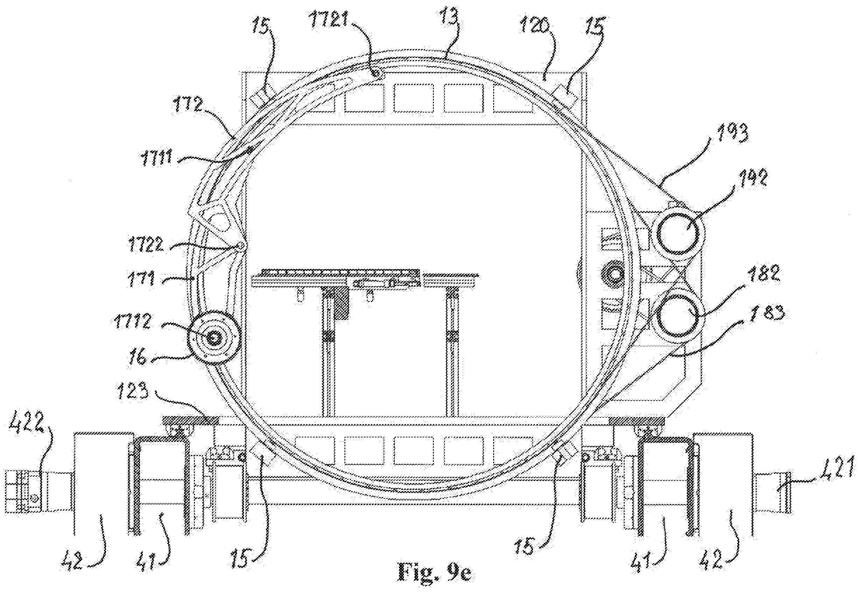

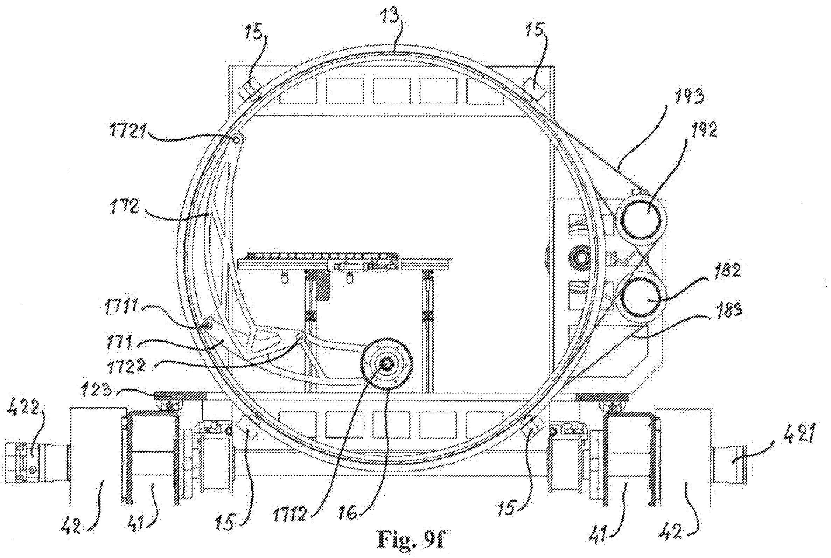

As shown In Figs. 9a-9f a preferred path of the press roll 16 includes one part where the press roll 16 first lifts the second half 24 (see fig 9a). The press roll 16 is then moved vertically, basically by means of the rotation of the pair of pulleys 13. Thereafter the distance between the end 1711 of the first link arm 171 and the first pivotal end 1721 of the second link arm 172 is increased to make the press roll 16 fold the second half 24 (see figs. 9b-9c) onto the first half 23 and the roll 16 ending up in a position (Fig. 9c) contacting and pressing on top of the second half 24 adjacent the centrally positioned end thereof. Thereafter the distance between the pivotal end 1711 of the first link arm 171 and the pivotal end 1721 of the second link arm 172 is continuously decreased to make the press roll 16 move along a horizontal path pressing the second half 24 on to the top of the first half 23 (see figs. 9d). Thereafter the press roll 16 is positioned in its outermost position by having the distance between the pivotal end 1711 of the first link arm 171 and the first pivotal end 1721 of the second link arm 172 at a minimum distance, requiring a limited space within the loop for the passage downwards of the press roll 16 at the peripheral end of the table 124 (see figs. 9e). Finally the press roll 16 is returned in a curved path under the table 124, wherein the distance between the pivotal end 1711 of the first link arm 171 and the pivotal end 1721 of the second link arm 172 is again continuously decreased (see fig 9f), to be moved to a start position to close the loop and to be in position for forming a subsequent building element 3. Preferably, the arrangement is such that during the full turn, the pivotal end 1711 of the first link 171 arm lies ahead of the first pivotal end 1721 of the second link arm 172 and an angle between these two pivotal ends varies within an interval of 40° to 70°. Thereby the desired shape of the loop can be achieved.

Accordingly, in Figs. 9a-9f there is shown the first pair 13 of ring pulleys and sequentially how the first and second link arms 171, 172 move the press roll 16, in a desired path, including a lifting path and a horizontal pressing path to perform the folding and pressing, by means of the multilink arrangement of the link arms 171, 172 that facilitates a controlled movement of the press roll 16 in desired path. Hence, thanks to this arrangement the link arms 171, 172 together with the pairs 13, 14 of ring pulleys will form a four link mechanism, whereby the movement of the end pivot point 1712 carrying the press roll 16 may be controlled to follow a variety of paths, by varying the speed at which the first drive 18 rotates the ring pulleys 131, 141 driven thereby in relation to the speed at which the second drive 19 rotates the ring pulleys 132, 142. Accordingly, thanks to the design, it is possible to use one and the same member, i.e. the press roll 16, to fold and thereafter also to pressurize/integrate a sheets to form a panel-shaped building element 3. Furthermore, by controlling the manner in which the first drive 18 rotates the ring pulleys 131, 141, and how the speed of rotation is varied during a turn, it is also possible to adjust the path of the press roll 16 and adapt the specific path to forming building elements 3 of varying widths. Hence, as described with reference to Figs. 9a-9f, the press roll 16 is moved in a loop of 360° in the same direction around the fibrous sheet 2, and during such loop the press roll 16 folds the fibrous sheet 2 to place the second half 24 on top of the first half 23, then presses the second half 24 against the spacing elements 25, 26, 27 on the first half 23 to become adhered thereto and to produce the building element 3, and then the press roll 16 returns to its starting position, moving below the fibrous sheet 2, the press roll 16 thereby completing the loop of 360°.

As is best shown in Figs. 4 and 8, the first drive 18 includes two first drive pulleys 182, and each first drive pulley drives an associated one of the two first ring pulleys 131, 141 over a first timing belt 183, and said two first drive pulleys 182 are interconnected by a synchronizing roll shaft 184. Also the second drive 19 includes two second drive pulleys 192, each second drive pulley drives an associated one of the two second ring pulleys 132, 142 over a second timing belt 193, and said two second drive pulleys 192 are interconnected by a synchronizing roll shaft 194.

To make it more efficient to include the folding and pressing device 1 in a production line, the frame 12 is designed to form a carriage for carrying the ring pulleys 131, 132, 141, 142, press roll 16, link systems 17, table 124 and drives 18, 19, and is adapted to be supported by an elongate support structure 4 and movable back and forth thereon. As best shown in Fig. 1, the support structure 4 includes two parallel beams 41, preferably identical, on which the carriage 12 is movable back and forth driven by a drive mechanism 42. The drive mechanism has a motor 421 with an output shaft (not shown) and a person skilled in the art knows many mechanisms that can convert a rotation of the motor shaft to a reciprocating movement of the carriage 12. Fig. 3 shows an embodiment where the drive mechanism 42 also includes a second motor 422 for reciprocating the carriage 12.

The conveyor assembly for transporting board material through the production line and referred to above but not shown in the drawings may be of various types known in the art, but preferably a belt conveyor having a pervious belt is provided for continuously feeding a sequence of fibrous sheets 2 through the folding and pressing device 1. Then, a suction member (not shown) is suitably provided for fixing a portion of each fibrous sheet 2 to the table 124 during the folding and pressing, and the folding and pressing device 1 is continuously reciprocating along the support structure to move together with each of the fibrous sheets 2 while carrying out said folding and pressing illustrated in Figs. 9a-9f. After such sequence of folding and pressing the carriage 12 returns to its upstream starting position and is ready to receive another fibrous sheet 2. Hereby the rate of production can be increased.

As shown in Fig. 9a, the main part of the table 124 may have an outer edge positioned to facilitate passage of the press roll 16 and an inner edge positioned adjacent the axis of the loop, (e.g. the ring pulleys 131, 132, 141, 142), which edges extends in parallel to the axis. Preferably, the table 124 includes a further part, besides the main part, and a longitudinal slot 1241 parallel to the axis. The further part of the table 124 may support the second half 24 prior to the press roll 16 starting the folding thereof.

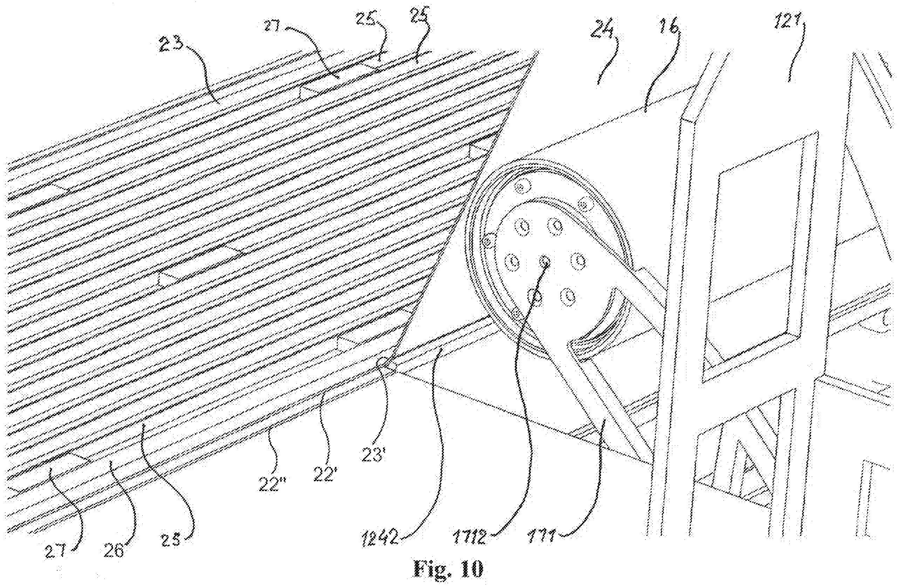

As illustrated in Fig. 10 the folding and pressing device 1 further comprises a first pushing apparatus 1242 acting adjacent the inner edge, e.g. through said slot 1241 (Fig. 9a), for assisting in an initial phase of the folding of the fibrous sheet 2. The first pushing apparatus 1242 may have the form of an elongated guide that folds the intermediate first elongate portion 23' in relation to the first half 23, in the first groove 22' (Fig. 11b), as illustrated in Fig. 10. The first pushing apparatus 1242 could achieve folding of the intermediate first elongate portion 23' in conjunction with (as illustrated in Fig. 10), or before, the rotary press roll 16 folding the second half 24 onto the first half 23.

As shown in Fig. 12a and 12b, the fibrous sheet 2 in addition to said first and second halves 23 and 24 and an intermediate first elongate portion 23' (Figs. 11b and 11c), which is adapted to form a first narrow face 31 of the building element 3, includes a second elongate portion 23" bounded from said first half 23 by (at least) a third identical groove 22' and adapted to form at least a major portion, preferably all, of a second narrow face 32 of the building element 3. Then, the folding and pressing device 1 further comprises a second pushing apparatus (not shown) for folding the fibrous sheet 2 in the third groove 22' to form a third 90 degree fold. Thereby, a possible joint 33 (as indicated in Fig. 14) between neighboring edges of the fibrous sheet 2 forming the exterior surface of the building element 3 may be located on the second narrow face 32 of the building element 3, or at the corner between the second narrow face 32 and the second large face 30.

If desired, as shown in Fig 11a and Figs. 12a and 12b, the second elongate portion 23" has an extension 23'" connected to it via a fourth groove 22", having a width adapted to extend a distance into the second large face 30 of the building element 3, so as to place the joint 33 away from the corner between the second narrow face 32 and the second large face 30 of the building element 3. Hence, the extension 23'" may be adapted to form a minor portion of the second large face 30 of the building element 3, and having the width of said second half 24 reduced by at least a width of the third elongate portion 23"'. Preferably the width of said second half 24 is reduced by more than the width of the third elongate portion 23"' to make the second half 24 and the third elongate portion 23"' form a gap 33 (Fig. 12b) of a desired width between them, e.g. to provide fitting space for a building member to be interconnected in an assembled furniture. Then, said second pushing apparatus (not shown) also folds the fibrous sheet 2 in the fourth groove 22" to form a fourth 90 degree fold. Thereby the possible joint 33 will be located on the second large face 30 of the building element 3.

To summarize, a method of and a device for folding over and pressing a fibrous sheet (2) to produce a panel-shaped building element (3) having two large faces (30) are disclosed. The device (1) comprises a press roll (16) that moves in a closed loop around the fibrous sheet (2) to first fold one half (24) of the fibrous sheet (2) over the other half (23) and then press the combined two halves (23, 24) to form the building element (3). Preferably, a sequence of fibrous sheets (1) is continuously fed through the device (1), and the device (1) continuously reciprocates to move together with each of the sheets during the folding and pressing thereof.

### INDUSTRIAL APPLICABILITY

The invention is applicable for producing panel-shaped building elements by folding and pressing fibrous sheets that are useful as walls and shelves in bookshelves, bookcases, storage compartments, and as table tops, for example.

## Claims

1. A method of folding over and pressing a fibrous sheet (2) to produce a panel-shaped building element (3) having two large faces (30), comprising:
- providing a fibrous sheet (2) having a width (W), a length (L), and a thickness (t) and including a first half (23) and a second half (24) adapted to form at least a part of the large faces (30) of the building element (3), the first half (23) carries spacing elements (25, 26, 27) for providing a desired thickness of the building element (3),
- providing an adhesive (28) for adhering the second half (24) to the spacing elements (25, 26, 27) -;
- providing a rotary press roll (16),
**characterized in** moving the press roll (16) in a loop of 360° in one and the same direction around the fibrous sheet (2) to carry out the following steps:
- i) folding the fibrous sheet (2) such that the second half (24) of the fibrous sheet (2) is placed on top of the first half (23); and
- ii) pressing the second half (24) of the fibrous sheet (2) against the spacing elements (25, 26, 27) on the first half (23) of the fibrous sheet (2) to become adhered thereto and to produce the building element (3) having two main faces (30) interconnected by the spacing elements (25, 26, 27) and the adhesive (28).

2. A method as claimed in claim 1, further comprising continuously feeding a sequence of fibrous sheets (2) through said loop, and at the same time moving the press roll (16) back and forth in a feeding direction (F) of the fibrous sheets (2) so as to move together with each of the fibrous sheets (2) while carrying out said folding and pressing.

3. A method according to any of the preceding claims, further comprising providing a conveyor for feeding the fibrous sheets (2) and a carriage (12) for carrying the press roll (16).

4. A method according to any of the preceding claims, further comprising providing at each end of the press roll (16) a link system (17) having two link arms (171, 172) for controlling the movement of the press roll (16) in said loop.

5. A method according to any of the preceding claims, wherein the fibrous sheet (2) on one side has a foil cladding (21) and on the opposite side has two lengthwise extending parallel grooves (22', 22") of perpendicularly at least partly V-shaped cross-section that are spaced apart from each other a distance (D) equal to an intended thickness (Ttot) of the building element (3) reduced by the double thickness of the cladding (21) and said grooves (22', 22") forming between them an intermediate first elongate portion (23') to permit the fibrous sheet (2) to be folded 90 degrees two times to position the second half (24) on top of the first half (23), preferably the first elongate portion (23') after those two times of 90 degree folding forms at least a major portion of a first narrow face (31) of the building element (3).

6. A method as claimed in claim 5, wherein the folding includes folding the fibrous sheet (2) in the groove (22') that is closest to the first half (23) of the fibrous sheet (2) to form a first 90 degree fold; and folding the fibrous sheet (2) in the other groove (22") to form a second 90 degree fold, whereby the second half (24) of the fibrous sheet (2) is placed on top of the first half (23), preferably said first 90 degree fold is completed before the completion of said second 90 degree fold .

7. A method as claimed in claim 6, wherein the fibrous sheet (2) in addition to said first and second halves (23 and 24) and an intermediate first elongate portion (23'), which is adapted to form a first narrow face (31) of the building element (3), includes a second elongate portion (23") bounded from said first half (23) by a third groove (22') and adapted to form at least a major portion of a second narrow face (32) of the building element (3), said method further comprising folding the fibrous sheet (2) in the third groove (22') to form a third 90 degree fold, wherein preferably the second elongate portion (23") has a width adapted to cover the second narrow face (32) of the building element (3).

8. A method as claimed in claim 7, wherein the fibrous sheet (2) in addition includes a third elongate portion (23"') bounded from the second elongate portion (23") by a fourth groove (22") and adapted to form a minor portion of the second large face (30) of the building element (3), and a width of said second half (24) is reduced by at least a width of the third elongate portion (23"') to make the second half (24) and the third elongate portion (23"') either meet or form a narrow gap (33), preferably of at most 10 millimeters, more preferred of at most 5 millimeters, width between them (23"', 24), said method further comprising folding the fibrous sheet (2) in the fourth groove (22") to form a fourth 90 degree fold.

9. A device for folding over and pressing a fibrous sheet (2) to produce a panel-shaped building element (3) having two large faces (30), **characterized in** said device (1) comprising:
- a drive arrangement including at least a pair of annular members (13, 14) for actuating a looping movement of at least a pair of arm members (17) pivotally and controllably connected thereto,
- a rotary press roll (16) extending between said arm members (17),
- a table (124) for receiving the fibrous sheet (2) located between the arm members (17),
- a control arrangement (18,19) arranged to move the press roll (16) in a loop of 360° from a position below the table (124) to firstly fold over a second half (24) of the sheet (2) onto a first half (23) of the sheet (2), secondly to press onto the second half (24) in counter action with the table (124) towards the first half (23) and finally to return the press roll (16) to a position below the table (124).

10. A device as claimed in claim 9, wherein
- each arm member comprise a link system (17) having a first (171) and a second (172) link arm, the first link arm (171) having a first end (1711) pivotally attached to one of the annular members (13, 14) and a second end (1712) rotary attached to the press roll (16), and the second link arm (172) having a first end (1721) pivotally attached to the same annular member (13, 14) and a second end (1722) pivotally attached to a middle portion of the first link arm (171).

11. A device as claimed in claim 10, wherein
- the annular members (13, 14) comprise a first (131) and a second (132) ring pulley in a first pair (13) of rotary ring pulleys, and a first (141) and a second (142) ring pulley in a second pair (14) of rotary ring pulleys, said ring pulleys (131, 132, 141, 142) being coaxial;

12. A device as claimed in any of claims 9-11, wherein
- peripherally arranged bearing assemblies (15) are arranged to support the annular members (13, 14) radially and axially.

13. A device as claimed in claim 11 or 12, wherein the control arrangement (18, 19) comprises:
- a first drive (18) for rotating the two first ring pulleys (131, 141),
- a second drive (19) for rotating the two second ring pulleys (132, 142);
- wherein one (18) of the first and second drives is arranged to rotate the pulleys (131, 141) rotated thereby at a speed that varies relatively to the speed at which the other (19) of the first and second drives rotates the pulleys (132, 142) rotated thereby during a completion of a full turn of the ring pulleys (131, 132, 141, 142).

14. A device as claimed in claim 13, wherein the second drive (19) is arranged to provide a first speed, preferably constant, and the first drive (18) includes a gear train (181) operatively connected to the second drive (19) and arranged to provide a second speed which varies in relation to the first speed.

15. A device as claimed in claim 13 or 14, wherein the varying speed is arranged to cause a distance between the pivotal end (1711) of the first link arm (171) and the first pivotal end (1721) of the second link arm (172) to vary during a turn so as to move the press roll (16) in the loop around the table (124).

16. A device as claimed in any of claims 10-15, wherein during the full turn the pivotal end (1711) of the first link arm (171) lies ahead of the first pivotal end (1721) of the second link arm (172) and an angle (α) between these two pivotal ends varies within an interval of 20° to 120°, preferably 30° to 90°.

17. A device as claimed in any one of claims 13-16, wherein the first drive (18) includes two first drive pulleys (182), each first drive pulley (182) driving an associated one of the two first ring pulleys (131, 141) over a first timing belt (183), and said two first drive pulleys (182) being interconnected by a synchronizing roll shaft (184).

18. A device as claimed in claim 17, wherein also the second drive (19) includes two second drive pulleys (192), each second drive pulley (192) driving an associated one of the two second ring pulleys (132, 142) over a second timing belt (193), and said two second drive pulleys (192) being interconnected by a synchronizing roll shaft (194).

19. A device as claimed in any of claims 9-18, comprising a carriage (12) for carrying said annular members (13, 14), press roll (16), arm members (17), table (124) and control arrangement (18, 19), said carriage (12) being adapted to be supported by an elongate support structure (4) and be movable back and forth thereon, the carriage (12) being arranged to move together with each of the fibrous sheets (2) while carrying out said folding and pressing.

20. A device as claimed in any of claims 9-19, wherein a belt conveyor having a pervious belt is provided for continuously feeding a sequence of fibrous sheets (2) through the device (1), preferably the device (1) includes a suction member arranged to fix a portion of each fibrous sheet (2) to the table (124).

21. A device as claimed in any of claims 9-20, wherein said table (124) has an inner end parallel to and adjacent the axis of the annular members (13, 14), said device (1) further comprising a first pushing apparatus (1242) acting at said end and arranged to fold an intermediate first elongate portion (23') of the fibrous sheet (2), preferably said device (1) further comprising a second pushing apparatus arranged to fold a second narrow face (32) of the fibrous sheet (2).

22. A device as claimed in any of claims 9-21, wherein the device (1) is arranged to handle the fibrous sheet (2) having a width (W), a length (L), and a thickness (t) and on one side is provided with a foil cladding (21) and on the opposite side is provided with two lengthwise extending parallel grooves (22) of perpendicularly V-shaped cross-section that are spaced apart from each other a distance equal to an intended thickness of the building element (3) reduced by the double thickness of the cladding (21) to form a first (23) and a second (24) half adapted to form the two large faces (30) of the building element (3) and to fold the fibrous sheet (2) to position the second half (24) on top of the first one (23), the first one (23) of the halves carrying spacing elements (25, 26, 27) for providing a desired thickness of the building element (3), and said spacing elements and/or said second half (24) carrying an adhesive (28) for fixing the second half (24) to the spacing elements (25, 26, 27), and wherein said press roll (16) has a length that is longer than the length (L) of the fibrous sheet (2).

23. A device as claimed in claim 22, wherein the annular members (13, 14) are spaced apart a greater distance than the length (L) of the fibrous sheet (2), and preferably being of a single size and having a diameter that is larger than the width (W) of the fibrous sheet (2).

## Patentansprüche

1. Verfahren zum Umfalten und Pressen einer Faserplatte (2), um ein wandförmiges Bauelement (3) mit zwei großen Oberflächen (30) herzustellen, umfassend:
- Bereitstellen einer Faserplatte (2) mit einer Breite (W), einer Länge (L) und einer Dicke (t) und einschließlich einer ersten Hälfte (23) und einer "zweiten Hälfte (24), angepasst, um mindestens einen Teil der großen Oberflächen (30) des Bauelements (3) zu bilden, wobei die erste Hälfte (23) Abstandselemente (25, 26, 27) zur Bereitstellung einer gewünschten Dicke des Bauelements (3) trägt,
- Bereitstellen eines Klebstoffs (28) zum Kleben der zweiten Hälfte (24) auf die Abstandselemente (25, 26, 27);
- Bereitstellen einer Rotationspresswalze (16),
**gekennzeichnet durch** Bewegen der Presswalze (16) in einer Schleife von 360° in einer und der gleichen Richtung um die Faserplatte (2), um die folgenden Schritte auszuführen:
- i) Falten der Faserplatte (2) so, dass die zweite Hälfte (24) der Faserplatte oben auf die erste Hälfte (23) gelegt wird; und
- ii) Pressen der zweiten Hälfte (24) der Faserplatte (2) gegen die Abstandselemente (25, 26, 27) auf der ersten Hälfte (23) der Faserplatte (2), um daran zu haften und das Bauelement (3) herzustellen, bei dem die beiden Hauptoberflächen (30) durch die Abstandselemente (25, 26, 27) und den Klebstoff (28) miteinander verbunden sind.

2. Verfahren nach Anspruch 1, ferner umfassend das kontinuierliche Zuführen einer Folge von Faserplatten (2) durch die Schleife und das gleichzeitige Hin- und Herbewegen der Presswalze (16) in einer Zuführrichtung (F) der Faserplatten (2), um sich zusammen mit jeder der Faserplatten (2) zu bewegen, während das Falten und Pressen ausgeführt wird.

3. Verfahren nach einem der vorhergehenden Ansprüche, wobei zum einen ein Förderer zum Zuführen der Faserplatten (2) und ein Schlitten (12) zum Tragen der Presswalze (16) vorgesehen sind.

4. Verfahren nach einem der vorhergehenden Ansprüche, ferner umfassend das Bereitstellen eines Verbindungssystems (17) an jedem Ende der Presswalze (16) mit zwei Verbindungsarmen (171, 172) zum Steuern der Bewegung der Presswalze (16)) in der Schleife.

5. Verfahren nach einem der vorhergehenden Ansprüche, wobei die Faserplatte (2) auf einer Seite eine Folienummantelung (21) aufweist und auf der gegenüberliegenden Seite zwei sich in Längsrichtung erstreckende parallele Nuten (22', 22") mit einem senkrecht zumindest teilweise V-förmigen Querschnitt aufweist, die um einen Abstand (D) voneinander beabstandet sind, der einer beabsichtigten Dicke (Ttot) des Bauelements (3) entspricht, verringert um die doppelte Dicke der Ummantelung (21), wobei die Nuten (22', 22") zwischen ihnen einen ersten länglichen Zwischenabschnitt (23') bilden, damit die Faserplatte (2) zweimal um 90° gefaltet werden kann, um die zweite Hälfte (24) auf der ersten Hälfte (23) zu positionieren, wobei vorzugsweise der erste längliche Abschnitt (23') nach diesen zwei Mal Falten um 90° mindestens einen Hauptabschnitt einer ersten schmalen Oberfläche (31) des Bauelements (3) bildet.

6. Verfahren nach Anspruch 5, wobei das Falten ein Falten der Faserplatte (2) in der Nut (22') umfasst, die der ersten Hälfte (23) der Faserplatte (2) am nächsten liegt, um eine erste Faltung um 90° zu bilden; und ein Falten der Faserplatte (2) in der anderen Nut (22"), um eine zweite Faltung um 90° zu bilden, wobei die zweite Hälfte (24) der Faserplatte (2) auf die erste Hälfte (23) gelegt wird; wobei vorzugsweise die erste 90-Grad-Faltung vor der Fertigstellung der zweiten 90-Grad-Faltung abgeschlossen ist.

7. Verfahren nach Anspruch 6, wobei die Faserplatte (2) zusätzlich zu der ersten und zweiten Hälfte (23 und 24) und einem ersten länglichen Zwischenabschnitt (23'), der angepasst ist, um eine erste schmale Oberfläche (31) des Bauelements (3) zu bilden, einen zweiten länglichen Abschnitt (23") umfasst, der von der ersten Hälfte (23) durch eine dritte Nut (22') abgegrenzt und angepasst ist, um mindestens einen Hauptabschnitt einer zweiten schmalen Oberfläche (32) des Bauelements (3) zu bilden, wobei das Verfahren ferner ein Falten der Faserplatte (2) in der dritten Nut (22') umfasst, um eine dritte 90-Grad-Faltung zu bilden, wobei vorzugsweise der zweite längliche Abschnitt (23") eine Breite aufweist, die angepasst ist, um die zweite schmale Oberfläche (32) des Bauelements (3) abzudecken.

8. Verfahren nach Anspruch 7, wobei die Faserplatte (2) zusätzlich einen dritten länglichen Abschnitt (23"') enthält, der von dem zweiten länglichen Abschnitt (23") durch eine vierte Nut (22") abgegrenzt und angepasst ist, um einen kleineren Teil der zweiten großen Oberfläche (30) des Bauelements (3) bilden, wobei eine Breite der zweiten Hälfte (24) um mindestens eine Breite des dritten länglichen Abschnitts (23"') verringert ist, damit sich die zweite Hälfte (24) und der dritte längliche Abschnitt (23"') entweder treffen oder einen engen Spalt (33) bilden, vorzugsweise von höchstens ₁₀ Millimetern, bevorzugter von höchstens 5 Millimetern Breite zwischen ihnen (23"', 24), wobei das Verfahren ferner ein Falten der Faserplatte (2) in der vierten Nut (22") umfasst, um eine vierte 90-Grad-Faltung zu bilden.

9. Vorrichtung zum Umfalten und Pressen einer Faserplatte (2), um ein wandförmiges Bauelement (3) mit zwei großen Oberflächen (30) herzustellen, **dadurch gekennzeichnet, dass** die Vorrichtung (1) umfasst:
- eine Antriebsanordnung mit mindestens einem Paar ringförmiger Elemente (13, 14) zum Betätigen einer Schleifenbewegung von mindestens einem Paar von Armelementen (17), die schwenkbar und steuerbar damit verbunden sind;
- eine rotierende Presswalze (16), die sich zwischen den Armelementen (17) erstreckt,
- einen Tisch (124) zur Aufnahme der Faserplatte (2), die sich zwischen den Armelementen (17) befindet;
- eine Steueranordnung (18, 19), die angeordnet ist, um die Presswalze (16) in einer Schleife von 360° zu bewegen, von einer Position unter dem Tisch (124), um zuerst eine zweite Hälfte (24) der Platte (2) auf eine erste Hälfte (23) der Platte (2) zu falten und um dann in Gegenwirkung mit dem Tisch (124) in Richtung der ersten Hälfte (23) auf die zweite Hälfte (24) drücken und schließlich die Presswalze (16) in eine Position unter dem Tisch (124) zurück zu bewegen.

10. Vorrichtung nach Anspruch 9, wobei
- jedes Armelement ein Verbindungssystem (17) mit einem ersten (171) und einem zweiten (172) Verbindungsarm umfassst, wobei der erste Verbindungsarm (171) ein erstes Ende (1711) aufweist, das schwenkbar an einem der ringförmigen Elemente (13, 14) angebracht ist, und ein zweites Ende (1712), das drehbar an der Presswalze (16) angebracht ist, wobei der zweite Verbindungsarm (172) mit einem ersten Ende (1721) schwenkbar an demselben ringförmigen Element (13, 14) befestigt ist und mit einem zweiten Ende (1722) schwenkbar an einem mittleren Abschnitt des ersten Verbindungsarms (171) befestigt ist.

11. Vorrichtung nach Anspruch 10, wobei
- die ringförmigen Elemente (13, 14) eine erste (131) und eine zweite (132) Ringriemenscheibe in einem ersten Paar (13) von Drehringriemenscheiben und eine erste (141) und eine zweite (142) Ringriemenscheibe in einem zweiten Paar (14) von Drehringriemenscheiben umfassen, wobei die Ringriemenscheiben (131, 132, 141, 142) koaxial sind.

12. Vorrichtung nach einem der Ansprüche 9 bis 11, wobei
- peripher angeordnete Lageranordnungen (15) so angeordnet sind, dass sie die ringförmigen Elemente (13, 14) radial und axial tragen.

13. Vorrichtung nach Anspruch 11 oder 12, wobei die Steueranordnung (18, 19) umfasst:
- einen ersten Antrieb (18) zum Drehen der beiden ersten Ringriemenscheiben (131, 141),
- einen zweiten Antrieb (19) zum Drehen der beiden zweiten Ringriemenscheiben (132, 142);
- wobei einer (18) des ersten und des zweiten Antriebs angeordnet ist, um die Riemenscheiben (131, 141) zu drehen, wodurch sie mit einer Geschwindigkeit gedreht werden, die relativ zu der Geschwindigkeit variiert, mit der der andere (19) des ersten und zweiten Antriebs die Riemenscheiben (132, 142) dreht, die dadurch während eines vollständigen Umlaufs der Ringriemenscheiben (131, 132, 141, 142) gedreht werden.

14. Vorrichtung nach Anspruch 13, wobei der zweite Antrieb (19) angeordnet ist, um eine erste Geschwindigkeit bereitzustellen, vorzugsweise konstant, und der erste Antrieb (18) einen Getriebezug (181) enthält, der betriebsmäßig mit dem zweiten Antrieb (19) verbunden und angeordnet ist, um eine zweite Geschwindigkeit bereitzustellen, die in Bezug auf die erste Geschwindigkeit variiert.

15. Vorrichtung nach Anspruch 13 oder 14, wobei die variierende Geschwindigkeit angeordnet ist, um einen Abstand zwischen dem Schwenkende (1711) des ersten Verbindungsarms (171) und dem ersten Schwenkende (1721) des zweiten Verbindungsarms (172) zu bewirken, um während einer Umdrehung zu variieren, so dass die Presswalze (16) in der Schleife um den Tisch (124) herum bewegt wird.

16. Vorrichtung nach einem der Ansprüche 10 bis 15, wobei während der vollen Drehung das Schwenkende (1711) des ersten Verbindungsarms (171) vor dem ersten Schwenkende (1721) des zweiten Verbindungsarms (172) liegt und ein Winkel (α) zwischen diesen beiden Schwenkenden variiert, innerhalb eines Intervalls von 20° bis 120°, vorzugsweise 30° bis 90°.

17. Vorrichtung nach einem der Ansprüche 13 bis 16, wobei der erste Antrieb (18) zwei erste Antriebsriemenscheiben (182) umfasst, wobei jede erste Antriebsriemenscheibe (182) eine zugeordnete der beiden ersten Ringriemenscheiben (131, 141) über einen ersten Steuerriemen (183) antreibt, und die beiden ersten Antriebsriemenscheiben (182) durch eine Synchronisierungsrollenwelle (184) miteinander verbunden sind.

18. Vorrichtung nach Anspruch 17, wobei auch der zweite Antrieb (19) zwei zweite Antriebsriemenscheiben (192) umfasst, wobei jede zweite Antriebsriemenscheibe (192) eine zugeordnete der beiden zweiten Ringriemenscheiben (132, 142) über einen zweiten Steuerriemen (193) antreibt und die zwei zweiten Antriebsriemenscheiben (192) durch eine Synchronisierungsrollenwelle (194) miteinander verbunden sind.

19. Vorrichtung nach einem der Ansprüche 9 bis 18, umfassend einen Schlitten (12) zum Tragen der ringförmigen Elemente (13, 14), der Presswalze (16), der Armelemente (17), des Tisches (124) und der Steueranordnung (18, 19), wobei der Schlitten (12) so angepasst ist, dass er von einer länglichen Stützstruktur (4) getragen wird und darauf hin und her beweglich ist, wobei der Schlitten (12) so angeordnet ist, dass er sich zusammen mit jeder der Faserplatten (2) bewegt, während das Falten und Pressen ausgeführt wird.

20. Vorrichtung nach einem der Ansprüche 9 bis 19, wobei ein Bandförderer mit einem durchlässigen Band zum kontinuierlichen Zuführen einer Folge von Faserplatten (2) durch die Vorrichtung (1) vorgesehen ist, wobei die Vorrichtung (1) vorzugsweise ein Saugelement umfasst, das angeordnet ist, um einen Teil einer jeden Faserplatte (2) an dem Tisch (124) zu fixieren.

21. Vorrichtung nach einem der Ansprüche 9 bis 20, wobei der Tisch (124) ein inneres Ende parallel zu und neben der Achse der Ringelemente (13, 14) aufweist, wobei die Vorrichtung (1) weiter eine erste Schubvorrichtung (1242) umfasst, die an dem Ende wirkt und angeordnet ist, um einen ersten länglichen Zwischenabschnitt (23') der Faserplatte (2) zu falten, wobei vorzugsweise die Vorrichtung (1) ferner eine zweite Schubvorrichtung umfasst, die angeordnet ist, um eine zweite schmale Oberfläche (32) der Faserplatte (2) zu falten.

22. Vorrichtung nach einem der Ansprüche 9 bis 21, wobei die Vorrichtung (1) zum Handhaben der Faserplatte (2) mit einer Breite (W), einer Länge (L) und einer Dicke (t) angeordnet, die auf einer Seite mit einer Folienummantelung (21) versehen ist und auf der gegenüberliegenden Seite mit zwei sich in Längsrichtung erstreckenden parallelen Nuten (22) mit einem senkrecht V-förmigen Querschnitt versehen ist, die einen Abstand voneinander haben, der einer beabsichtigten Dicke des Bauelements (3) entspricht, reduziert um die doppelte Dicke der Ummantelung (21) zur Bildung einer ersten (23) und einer zweiten (24) Hälfte, angepasst zur Bildung der beiden großen Oberflächen (30) des Bauelements (3) und zum Falten der Faserplatte (2), um die zweite Hälfte (24) oben auf der ersten (23) Hälfte zu positionieren, wobei die erste (23) der Hälften Abstandselemente (25, 26, 27) zur Bereitstellung einer gewünschten Dicke des Bauelements (3) trägt und die Abstandselemente und / oder die zweite Hälfte (24) einen Klebstoffs (28) zum Befestigen der zweiten Hälfte (24) an den Abstandselementen (25, 26, 27) trägt, und wobei die Presswalze (16) eine Länge hat, die länger als die Länge (L) der Faserplatte (2) ist.

23. Vorrichtung nach Anspruch 22, wobei die ringförmigen Elemente (13, 14) um einen größeren Abstand als die Länge (L) der Faserplatte (2) voneinander beabstandet sind und vorzugsweise von einer einzigen Größe sind und einen Durchmesser haben, der größer ist als die Breite (W) der Faserplatte(2).

## Revendications

1. Procédé de pliage sur elle-même et de pressage d'une feuille fibreuse (2) pour produire un élément de construction en forme de panneau (3) comportant deux grandes faces (30), comprenant les étapes consistant à :
- utiliser une feuille fibreuse (2) ayant une largeur (W), une longueur (L) et une épaisseur (t) et comprenant une première moitié (23) et une seconde moitié (24) adaptées pour former au moins une partie des grandes faces (30) de l'élément de construction (3), la première moitié (23) portant des éléments d'espacement (25, 26, 27) permettant de donner une épaisseur souhaitée à l'élément de construction (3),
- utiliser un adhésif (28) pour coller la seconde moitié (24) aux éléments d'espacement (25, 26, 27) ;
- utiliser un rouleau presseur rotatif (16),
**caractérisé par** une mise en mouvement du rouleau presseur (16) dans une boucle de 360° dans un seul et même sens autour de la feuille fibreuse (2) pour exécuter les étapes suivantes consistant à :
- i) plier la feuille fibreuse (2) de sorte que la seconde moitié (24) de la feuille fibreuse (2) soit placée au-dessus de la première moitié (23) ; et
- ii) presser la seconde moitié (24) de la feuille fibreuse (2) contre les éléments d'espacement (25, 26, 27) sur la première moitié (23) de la feuille fibreuse (2) pour qu'elle y adhère et pour produire l'élément de construction (3) comportant deux faces principales (30) reliées mutuellement par les éléments d'espacement (25, 26, 27) et l'adhésif (28).

2. Procédé selon la revendication 1, comprenant en outre l'étape consistant à avancer de façon continue une suite de feuilles fibreuses (2) à travers ladite boucle, et à mettre en mouvement en même temps le rouleau presseur (16) d'avant en arrière dans un sens d'avance (F) des feuilles fibreuses (2) de façon qu'il se déplace conjointement avec chacune des feuilles fibreuses (2) tout en exécutant ledit pliage et ledit pressage.

3. Procédé selon l'une ou l'autre des revendications précédentes, comprenant en outre l'étape consistant à utiliser un convoyeur pour avancer les feuilles fibreuses (2) et un chariot (12) pour supporter le rouleau presseur (16) .

4. Procédé selon l'une quelconque des revendications précédentes, comprenant en outre l'étape consistant à disposer, au niveau de chaque extrémité du rouleau presseur (16), un système de liaison (17) comportant deux bras de liaison (171, 172) permettant de commander le mouvement du rouleau presseur (16) dans ladite boucle.

5. Procédé selon l'une quelconque des revendications précédentes, dans lequel la feuille fibreuse (2) comporte, d'un côté, un revêtement sous forme de feuille (21) et, du côté opposé, deux rainures parallèles s'étendant longitudinalement (22', 22") de section transversale perpendiculairement au moins partiellement en forme de V qui sont espacées l'une de l'autre d'une distance (D) égale à une épaisseur attendue (Tot) de l'élément de construction (3) réduite de la double épaisseur du revêtement (21) et desdites rainures (22', 22") formant entre elles une première partie intermédiaire allongée (23') de façon à permettre de plier la feuille fibreuse (2) deux fois sur 90 degrés pour positionner la seconde moitié (24) au-dessus de la première moitié (23), la première partie allongée (23'), après ces deux pliages de 90 degrés, formant de préférence au moins une partie majeure d'une première face étroite (31) de l'élément de construction (3).

6. Procédé selon la revendication 5, dans lequel le pliage consiste à plier la feuille fibreuse (2) dans la rainure (22') qui est située le plus proche de la première moitié (23) de la feuille fibreuse (2) pour former un premier pli de 90 degrés ; et à plier la feuille fibreuse (2) dans l'autre rainure (22") pour former un second pli de 90 degrés, moyennant quoi la seconde moitié (24) de la feuille fibreuse (2) est placée au-dessus de la première moitié (23), ledit premier pli de 90 degrés étant de préférence exécuté avant l'exécution dudit second pli de 90 degrés.

7. Procédé selon la revendication 6, dans lequel la feuille fibreuse (2) comprend, en plus desdites première et seconde moitiés (23 et 24) et d'une première partie intermédiaire allongée (23'), qui est adaptée pour former une première face étroite (31) de l'élément de construction (3), une deuxième partie allongée (23") délimitée par rapport à ladite première moitié (23) par une troisième rainure (22') et adaptée pour former au moins une partie majeure d'une seconde face étroite (32) de l'élément de construction (3), ledit procédé comprenant en outre l'étape consistant à plier la feuille fibreuse (2) dans la troisième rainure (22') pour former un troisième pli de 90 degrés, dans lequel la seconde partie allongée (23") a de préférence une largeur conçue pour couvrir la seconde face étroite (32) de l'élément de construction (3).

8. Procédé selon la revendication 7, dans lequel la feuille fibreuse (2) comprend de plus une troisième partie allongée (23"') délimitée par rapport à la deuxième partie allongée (23") par une quatrième rainure (22") et conçue pour former une partie miroir de la seconde grande face (30) de l'élément de construction (3), et une largeur de ladite seconde moitié (24) est réduite d'au moins une largeur de la troisième partie allongée (23"') de façon à amener la seconde moitié (24) et la troisième partie allongée (23"') soit à se rencontrer soit à former un espace étroit (33), une largeur entre ces dernières (23"', 24) les séparant étant inférieure ou égale à 10 millimètres, on préfère davantage inférieure ou égale à 5 millimètres, ledit procédé comprenant en outre l'étape consistant à plier la feuille fibreuse (2) dans la quatrième rainure (22"') pour former un quatrième pli de 90 degrés.

9. Dispositif pour plier sur elle-même et presser une feuille fibreuse (2) pour produire un élément de construction en forme de panneau (3) comportant deux grandes faces (30), **caractérisé en ce que** ledit dispositif (1) comprend :
- un agencement d'entraînement comprenant au moins deux éléments annulaires (13, 14) destinés à actionner un mouvement de boucle d'au moins deux éléments bras (17) reliés de manière pivotante à ces derniers et de manière à pouvoir être commandés,
- un rouleau presseur rotatif (16) s'étendant entre lesdits éléments bras (17),
- une table (124) destinée à recevoir la feuille fibreuse (2) entre les éléments bras (17),
- un agencement de commande (18, 19) conçu pour mettre en mouvement le rouleau presseur (16) dans une boucle de 360° d'une position située sous la table (124) visant à d'abord replier une seconde moitié (24) de la feuille (2) sur une première moitié (23) de la feuille (2), à presser deuxièmement la seconde moitié (24) par une action contraire par rapport à la table (124) en direction de la première moitié (23) et à ramener enfin le rouleau presseur (16) à une position située sous la table (124).

10. Dispositif selon la revendication 9, dans lequel
- chaque élément bras comprend un système de liaison (17) comprenant un premier bras de liaison (171) et un second bras de liaison (172), le premier bras de liaison (171) comportant une première extrémité (1711) fixée pivotante à l'un des éléments annulaires (13, 14) et une seconde extrémité (1712) fixée rotative au rouleau presseur (16), et le second bras de liaison (172) comportant une première extrémité (1721) fixée pivotante au même élément annulaire (13, 14) et une seconde extrémité (1722) fixée pivotante à une partie centrale du premier bras de liaison (171) .

11. Dispositif selon la revendication 10, dans lequel
- les éléments annulaires (13, 14) comprennent une première poulie annulaire (131) et une seconde poulie annulaire (132) d'une première paire (13) de poulies annulaires rotatives, et une première poulie annulaire (141) et une seconde poulie annulaire (142) d'une seconde paire (14) de poulies annulaires rotatives, lesdites poulies annulaires (131, 132, 141, 142) étant coaxiales.

12. Dispositif selon l'une quelconque des revendications 9 à 11, dans lequel
- des ensembles de roulement disposés de manière périphérique (15) sont disposés pour supporter radialement et axialement les éléments annulaires (13, 14).

13. Dispositif selon la revendication 11 ou 12, dans lequel l'agencement de commande (18, 19) comprend :
- un premier dispositif d'entraînement (18) destiné à entraîner en rotation les deux premières poulies annulaires (131, 141),
- un second dispositif d'entraînement (19) destiné à entraîner en rotation les deux secondes poulies annulaires (132, 142) ;
- dans lequel l'un (18) des premier et second dispositifs d'entraînement est conçu pour entraîner en rotation les poulies (131, 141) ainsi entraînées en rotation à une vitesse qui varie relativement à la vitesse à laquelle l'autre (19) des premier et second dispositifs d'entraînement entraîne en rotation les poulies (132, 142) ainsi entraînées en rotation pendant l'exécution d'un tour complet des poulies annulaires (131, 132, 141, 142).

14. Dispositif selon la revendication 13, dans lequel le second dispositif d'entraînement (19) est conçu pour fournir une première vitesse, de préférence constante, et le premier dispositif d'entraînement (18) comprend un train d'engrenages (181) en prise fonctionnelle avec le second dispositif d'entraînement (19) et conçu pour fournir une seconde vitesse qui varie par rapport à la première vitesse.

15. Dispositif selon la revendication 13 ou 14, dans lequel la vitesse qui varie est prévue pour amener une distance séparant l'extrémité pivotante (1711) du premier bras de liaison (171) et la première extrémité pivotante (1721) du second bras de liaison (172) à varier sur un tour de façon à mettre en mouvement le rouleau presseur (16) dans la boucle autour de la table (124).

16. Dispositif selon l'une quelconque des revendications 10 à 15, dans lequel, pendant le tour complet, l'extrémité pivotante (1711) du premier bras de liaison (171) se trouve en avant de la première extrémité pivotante (1721) du second bras de liaison (172), et un angle (α) entre ces deux extrémités pivotantes varie sur un intervalle de 20° à 120°, de préférence de 30° à 90°.

17. Dispositif selon l'une quelconque des revendications 13 à 16, dans lequel le premier dispositif d'entraînement (18) comprend deux premières poulies d'entraînement (182), chaque première poulie d'entraînement (182) entraînant l'une, associée, des deux premières poulies annulaires (131, 141) sur une première courroie crantée (183), et lesdites deux premières poulies d'entraînement (182) étant en prise mutuelle par un arbre porte-poulies de synchronisation (184).

18. Dispositif selon la revendication 17, dans lequel le second dispositif d'entraînement (19) comprend en outre deux secondes poulies d'entraînement (192), chaque seconde poulie d'entraînement (192) entraînant l'une, associée, des deux secondes poulies annulaires (132, 142) sur une seconde courroie crantée (193), et lesdites deux secondes poulies d'entraînement (192) étant en prise mutuelle par un arbre porte-poulies de synchronisation (194).

19. Dispositif selon l'une quelconque des revendications 9 à 18, comprenant un chariot (12) destiné à supporter lesdits éléments annulaires (13, 14), ledit rouleau presseur (16), lesdits éléments bras (17), ladite table (124) et ledit agencement de commande (18, 19), ledit chariot (12) étant conçu pour être supporté par une structure de support allongée (4) et pour être mobile d'avant en arrière sur cette dernière, le chariot (12) étant conçu pour un déplacement conjoint avec chacune des feuilles fibreuses (2) tout en exécutant ledit pliage et ledit pressage.

20. Dispositif selon l'une quelconque des revendications 9 à 19, dans lequel un convoyeur à bande comportant une bande perméable est prévu pour avancer de façon continue une suite de feuilles fibreuses (2) à travers le dispositif (1), le dispositif (1) comprenant de préférence un élément ventouse apte à fixer une partie de chaque feuille fibreuse (2) à la table (124).

21. Dispositif selon l'une quelconque des revendications 9 à 20, dans lequel ladite table (124) comporte une extrémité intérieure parallèle et adjacente à l'axe des éléments annulaires (13, 14), ledit dispositif (1) comprenant en outre un premier appareil de poussée (1242) agissant au niveau de ladite extrémité et étant apte à plier une première partie allongée intermédiaire (23') de la feuille fibreuse (2), ledit dispositif (1) comprenant en outre de préférence un second appareil de poussée apte à plier une seconde face étroite (32) de la feuille fibreuse (2) .

22. Dispositif selon l'une quelconque des revendications 9 à 21, dans lequel le dispositif (1) est conçu pour manipuler la feuille fibreuse (2) ayant une largeur (W), une longueur (L) et une épaisseur (t), et dotée, du côté opposé, de deux rainures parallèles s'étendant longitudinalement (22) de section transversale perpendiculairement en forme de V qui sont espacées l'une de l'autre d'une distance égale à une épaisseur attendue de l'élément de construction (3) réduite de la double épaisseur du revêtement (21) pour former des première (23) et seconde (24) moitiés adaptées pour former les deux grandes faces (30) de l'élément de construction (3) et pour plier la feuille fibreuse (2) de façon à positionner la seconde moitié (24) au-dessus de la première moitié (23), la première moitié (23) des moitiés portant des éléments d'espacement (25, 26, 27) permettant de donner une épaisseur souhaitée à l'élément de construction (3), et lesdits éléments d'espacement et/ou ladite seconde moitié (24) portant un adhésif (28) ayant pour rôle de fixer la seconde moitié (24) aux éléments d'espacement (25, 26, 27), et dans lequel ledit rouleau presseur (16) a une longueur plus longue que la longueur (L) de la feuille fibreuse (2).

23. Dispositif selon la revendication 22, dans lequel les éléments annulaires (13, 14) sont espacés d'une distance plus grande que la longueur (L) de la feuille fibreuse (2) et ont de préférence une taille unique et un diamètre plus grand que la largeur (W) de la feuille fibreuse (2).
